# EUROPEAN PATENT APPLICATION

(11) **EP 4 593 454 A1**
(43) Date of publication of application: **30.07.2025**
(21) Application number: 23893285.9
(22) Date of filing: 16.08.2023
(51) Int. Cl.: H04W 28/02

(54) **MULTI-NETWORK COLLABORATIVE OPERATION METHOD, DEVICE, AND STORAGE MEDIUM**

(30) Priority: 23.11.2022 CN 202211470740
(71) Applicant: Honor Device Co., Ltd., Shenzhen, Guangdong 518040 (CN)
(72) Inventor: LI, Zhongjin, Shenzhen, Guangdong 518040 (CN)
(74) Representative: Goddar, Heinz J.
(86) International application number: PCT/CN2023/113280
(87) International publication number: WO 2024/109187

(57) **Abstract**

The disclosure provides a method for multi-network coordinated operation, a device, and a storage medium. According to the method, when it is determined that a WIFI network currently accessed by a first terminal device fails to satisfy service demands of a plurality of service flows that have to be processed in the first terminal device, the WIFI network and a hotspot network enabled by a second terminal device are used simultaneously, a service flow having a higher priority is received and transmitted by the hotspot network, and the other service flows are reserved in the WIFI network for reception and transmission. Thus, not only normal processing of the service flow can be ensured, but also consumption of cellular traffic can be reduced.

## Description

The disclosure claims the priority to Chinese Patent Application No. 202211470740.2, filed with the Chinese Patent Office on November 23, 2022 and entitled "Method for multi-network coordinated operation, device, and storage medium", which is incorporated in its entirety herein by reference.

### TECHNICAL FIELD

The disclosure relates to the technical field of communication, and particularly relates to a method for multi-network coordinated operation, a device, and a storage medium.

### BACKGROUND

Development and popularization of Internet technologies offer convenience to people's daily life, work and entertainment. For example, a user can access a terminal device of a wireless local area network, such as a WIFI network or a cellular network (a mobile network) to process services such as audio/video conferences, live streaming, and games.

However, for some terminal devices merely having a WIFI communication capability and having no cellular communication capability, when environments in which the terminal devices are located have no accessible WIFI network or provide poor WIFI networks, services relying on the networks, such as audio/video conferences, live streaming, and online games, will fail to be processed.

### SUMMARY

In order to solve the technical problem, the disclosure provides a method for multi-network coordinated operation, a device, and a storage medium, such that a terminal device having no cellular communication capability can process services with a terminal device having a cellular communication capability, multi-network coordinated operation can be implemented, and further the services can be normally processed.

According to a first aspect, the disclosure provides a method for multi-network coordinated operation. The method is applied to a first terminal device. The method includes the following steps: when a service flow having a first priority and a service flow having a second priority that have to be processed exist, current WIFI network information is obtained; a QoE evaluation result of user experience is determined according to the WIFI network information, the service flow having the first priority, and the service flow having the second priority, where the QoE evaluation result is used for indicating whether a WIFI network is capable of simultaneously processing the service flow having the first priority and the service flow having the second priority, and the first priority is higher than the second priority; and when it is determined that the QoE evaluation result indicates that the WIFI network is incapable of simultaneously processing the service flow having the first priority and the service flow having the second priority, the service flow having the first priority is dispatched to a hotspot network enabled by a second terminal device, and the service flow having the second priority is dispatched to the WIFI network. The second terminal device establishes a mobile connection to a base station through a cellular network, and establishes a wireless connection to the first terminal device through the hotspot network.

In this way, when it is determined that a WIFI network currently accessed by the first terminal device fails to satisfy service demands of a plurality of service flows that have to be processed in the first terminal device, the WIFI network and the hotspot network enabled by the second terminal device are used simultaneously, a service flow having a higher priority is received and transmitted by the hotspot network, and the other service flows are reserved in the WIFI network for reception and transmission. Thus, not only normal processing of the service flow can be ensured, but also consumption of cellular traffic can be reduced.

According to the first aspect, in a process in which the first terminal device uses the WIFI network, the method further includes the following steps: applications currently running on the first terminal device are determined, where the applications include a first application having a first priority and a second application having a second priority; a service flow corresponding to the first application is used as the service flow having the first priority; and a service flow corresponding to the second application is used as the service flow having the second priority.

In this way, concurrent processing of service flows between different applications is implemented. Reference may be made to description of an application-level but not flow-division mode below for details, which will not be repeated herein.

According to the first aspect, or any implementation of the first aspect, in a process in which the first terminal device uses the WIFI network, the method further includes the following steps: the applications currently running on the first terminal device are determined, where the applications include the first application having the first priority and the second application having the second priority; a source of a service flow corresponding to the first application is determined; when it is determined that the service flow corresponding to the first application is from a service scene, the service flow corresponding to the first application is used as the service flow having the first priority; when it is determined that the source of the service flow corresponding to the first application at least includes two service scenes, a priority corresponding to each of the service scenes is determined; a service flow corresponding to the service scene having a higher priority in the first application is used as the service flow having the first priority, and a service flow corresponding to the service scene having a lower priority in the first application is used as the service flow having the second priority; a source of a service flow corresponding to the second application is determined; when it is determined that the service flow corresponding to the second application is from a service scene, the service flow corresponding to the second application is used as the service flow having the second priority; when it is determined that the source of the service flow corresponding to the second application at least includes two service scenes, a priority corresponding to each of the service scenes is determined; and a service flow corresponding to the service scene having a higher priority in the second application is used as the service flow having the first priority, and a service flow corresponding to the service scene having a lower priority in the second application is used as the service flow having the second priority.

In this way, concurrent processing of service flows corresponding to different service scenes in a same application is implemented. Reference may be made to description of a concurrent flow-division mode of different service flows of the same application below for details, which will not be repeated herein.

According to the first aspect, or any implementation of the first aspect, the step that the source of the service flow corresponding to the first application is determined includes the following steps: a number of service scenes included in the first application is determined according to attribute information of the first application; when it is determined that a number of the service scene included in the first application is 1, it is determined that the service flow corresponding to the first application is from a service scene; when it is determined that the number of service scenes included in the first application is greater than 1, an application programming interface invoked when the first application provides the service flow is determined, where different application programming interfaces correspond to different service scenes; and de-duplication is conducted on the invoked application programming interface, and a number of service scenes of the service flow provided by the first application is obtained.

In this way, a source of a current service flow is determined by determining a number of service scenes included in the first application, such that it is more appropriate to determine a priority of the service flow later based on the source of the service flow, then conduct concurrent flow-diversion, and dispatch the service flow to the WIFI network or the hotspot network.

According to the first aspect, or any implementation of the first aspect, the step that the source of the service flow corresponding to the second application is determined includes the following steps: a number of service scenes included in the second application is determined according to attribute information of the second application; when it is determined that a number of the service scene included in the second application is 1, it is determined that the service flow corresponding to the second application is from a service scene; when it is determined that the number of service scenes included in the second application is greater than 1, an application programming interface invoked when the second application provides the service flow is determined, where different application programming interfaces correspond to different service scenes; and de-duplication is conducted on the invoked application programming interface, and a number of service scenes of the service flow provided by the second application is obtained.

In this way, a source of a current service flow is determined by determining a number of service scenes included in the second application, such that it is more appropriate to determine a priority of the service flow later based on the source of the service flow, then conduct concurrent flow-diversion, and dispatch the service flow to the WIFI network or the hotspot network.

According to the first aspect, or any implementation of the first aspect, the method further includes the following step: when it is determined that the QoE evaluation result indicates that the WIFI network is incapable of processing both the service flow having the first priority and the service flow having the second priority, both the service flow having the first priority and the service flow having the second priority are dispatched to the hotspot network enabled by the second terminal device.

In this way, in a case without an available WIFI network, the service flow that has to be processed is dispatched to the hotspot network, such that normal service processing of the first terminal device can be ensured, and user experience can be ensured. Reference may be made to description with only existence of a hotspot network link in an either-or network mode below for details, which will not be repeated herein.

According to the first aspect, or any implementation of the first aspect, after both the service flow having the first priority and the service flow having the second priority are dispatched to the hotspot network enabled by the second terminal device, the method further includes the following steps: when it is determined that the QoE evaluation result indicates that the WIFI network is capable of simultaneously processing the service flow having the first priority and the service flow having the second priority or another accessible WIFI network is searched for, dispatching the service flow having the first priority and the service flow having the second priority to the hotspot network is stopped, and the service flow having the first priority and the service flow having the second priority are dispatched to the WIFI network, or another accessible WIFI network is searched for.

In this way, in a case with an available WIFI network, dispatching all or some service flows to the hotspot network is stopped, and the service flows are dispatched to the WIFI network for processing, such that consumption of cellular traffic of the second terminal device is reduced.

According to the first aspect, or any implementation of the first aspect, the method further includes the following step: when it is determined that the QoE evaluation result indicates that the WIFI network is capable of simultaneously processing the service flow having the first priority and the service flow having the second priority, both the service flow having the first priority and the service flow having the second priority are dispatched to the WIFI network.

In this way, in an either-or network mode, as long as there is an available WIFI network, a service flow that has to be processed by the first terminal device is dispatched to the WIFI network without resort to the hotspot network enabled by the second terminal device, such that consumption of cellular traffic of the second terminal device is reduced. Reference may be made to description with only existence of a WIFI network link in an either-or network mode below for details, which will not be repeated herein.

According to the first aspect, or any implementation of the first aspect, the method further includes the following steps: whether the first terminal device enables a multi-network coordinated operation function is determined; when it is determined that the first terminal device enables the multi-network coordinated operation function, the step that the service flow having the first priority is dispatched to the hotspot network enabled by the second terminal device is performed; a first access is displayed when it is determined that the first terminal device does not enable the multi-network coordinated operation function; and the multi-network coordinated operation function is enabled in response to an operation behavior of the first access, and the step that the service flow having the first priority is dispatched to the hotspot network enabled by the second terminal device is performed.

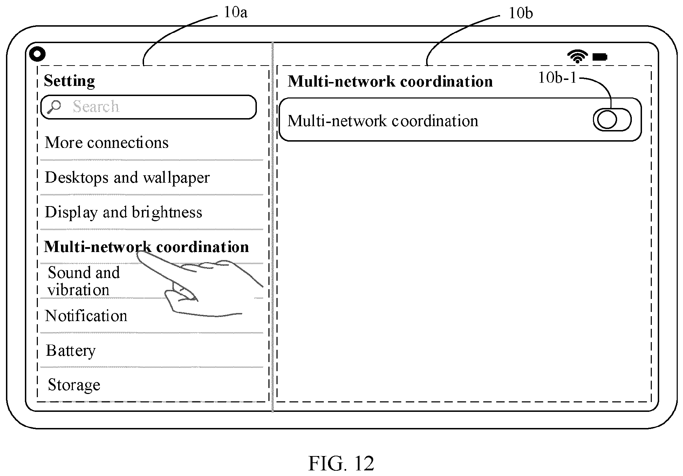

In this way, the first access is provided, such that a user can conveniently enable the multi-network coordinated operation function. For example, the first access may be integrated in a setting interface corresponding to a setting application, such as a space 10b-1 shown in FIG. 12.

According to the first aspect, or any implementation of the first aspect, before the service flow having the first priority is dispatched to the hotspot network enabled by the second terminal device, the method further includes the following steps: whether to access the hotspot network enabled by the second terminal device is determined; when the hotspot network enabled by the second terminal device is accessed, the step that the service flow having the first priority is dispatched to the hotspot network enabled by the second terminal device is performed; when the hotspot network enabled by the second terminal device is not accessed, hotspot network information within a connection range is obtained, where the hotspot network information includes hotspot networks enabled by all third terminal devices having a cellular communication capability within the connection range; the third terminal device having the hotspot network optimal in network quality in the hotspot network information is used as the second terminal device; and the hotspot network enabled by the second terminal device is accessed, and the step that the service flow having the first priority is dispatched to the hotspot network enabled by the second terminal device is performed.

Illustratively, a method for searching for a hotspot network is similar to an existing method for searching for a WIFI network on an interface of a wireless local area network, and will not be repeated herein.

According to the first aspect, or any implementation of the first aspect, after the hotspot network information within the connection range is obtained, the method further includes the following steps: the hotspot network information is displayed on an interface of the first terminal device; and in response to a selection operation of a user for any hotspot network in the hotspot network information, the third terminal device providing the hotspot network is used as the second terminal device, the hotspot network enabled by the second terminal device is accessed, and the step that the service flow having the first priority is dispatched to the hotspot network enabled by the second terminal device is performed.

According to the first aspect, or any implementation of the first aspect, before the hotspot network information within the connection range is obtained, the method further includes the following steps: whether a multi-screen coordinated connection is established between the first terminal device and the second terminal device is determined; when it is determined that the multi-screen coordinated connection is established between the first terminal device and the second terminal device, the second terminal device is controlled to enable the hotspot network, the hotspot network enabled by the second terminal device is accessed, and the step that the service flow having the first priority is dispatched to the hotspot network enabled by the second terminal device is performed; and when it is determined that the multi-screen coordinated connection is not established between the first terminal device and the second terminal device, the step that the hotspot network information within the connection range is obtained is performed.

According to the first aspect, or any implementation of the first aspect, in different first terminal devices, same applications have a same priority, and same service scenes have a same priority.

According to the first aspect, or any implementation of the first aspect, in different first terminal devices, same applications have different priorities, and same service scenes have different priorities.

According to a second aspect, the disclosure provides a method for multi-network coordinated operation. The method is applied to a first terminal device. The method includes the following steps: in a process in which a first icon and a second icon are displayed on a display interface of the first terminal device, a service flow having a first priority is dispatched to a hotspot network indicated by the second icon and a service flow having a second priority is dispatched to a WIFI network indicated by the first icon when a service flow that has to be processed exists. The first priority is higher than the second priority, and the hotspot network is provided by a second terminal device establishing a mobile connection to a base station.

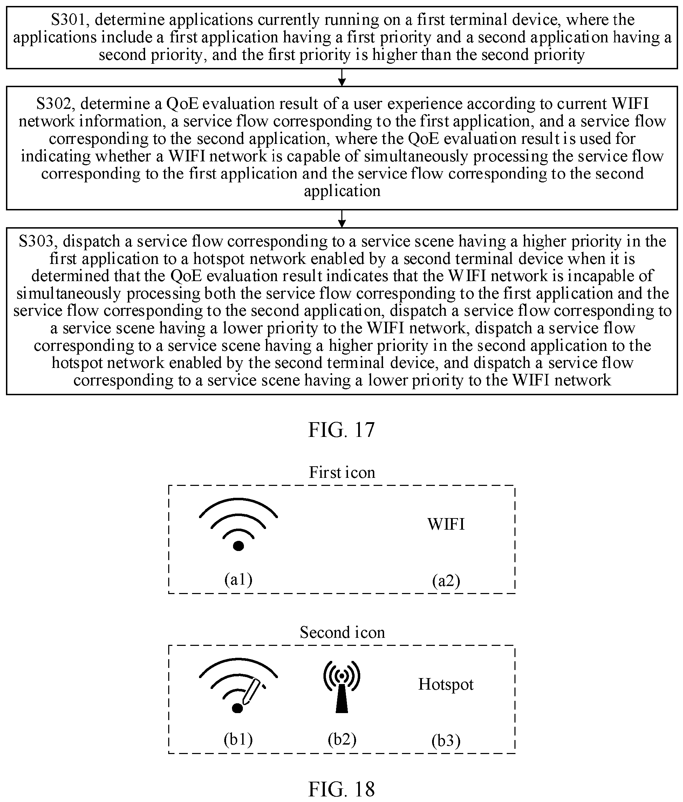

Illustratively, a pattern of the first icon is illustratively shown in (a1) or (a2) in FIG. 18. A pattern of the second icon is illustratively shown in (b1), (b2), or (b3) in FIG. 18.

According to the second aspect, the method further includes the following step: in a process in which the first icon displayed on the display interface disappears and the second icon is displayed, the service flow is dispatched to the hotspot network indicated by the second icon when the service flow that has to be processed exists.

According to the second aspect, or any implementation of the second aspect, the method further includes the following step: after the first icon is re-displayed on the display interface, dispatching the service flow to the hotspot network is stopped, and the service flow is dispatched to the WIFI network indicated by the first icon; or, dispatching the service flow having the second priority to the hotspot network is stopped, the service flow having the first priority is dispatched to the hotspot network indicated by the second icon, and the service flow having the second priority is dispatched to the WIFI network indicated by the first icon.

According to the second aspect, or any implementation of the second aspect, the method further includes the following step: in a process in which the second icon displayed on the display interface disappears and the first icon is displayed, the service flow is dispatched to the WIFI network indicated by the first icon when the service flow that has to be processed exists.

According to the second aspect, or any implementation of the second aspect, the service flow having the first priority is a service flow generated in an application or a service scene of an audio/video calling/conference type that runs at a foreground, and the service flow having the second priority is a service flow generated in an application or a service scene that runs at a background.

Illustratively, reference may be made to Table 1 below for a relationship between priorities of different service flows, which will not be repeated herein.

According to the second aspect, or any implementation of the second aspect, the service flow having the first priority is a service flow generated in an application or a service scene of a gaming type that runs at a foreground, and the service flow having the second priority is a service flow generated in an application or a service scene that runs at a background.

Illustratively, reference may be made to Table 1 below for a relationship between priorities of different service flows, which will not be repeated herein.

The second aspect and any implementation of the second aspect correspond to the first aspect and any implementation of the first aspect, respectively. Reference may be made to technical effects corresponding to the first aspect and any implementation of the first aspect for technical effects corresponding to the second aspect and any implementation of the second aspect, which will not be repeated herein.

According to a third aspect, the disclosure provides a system for multi-network coordinated operation. The system includes: a first terminal device and a second terminal device. The second terminal device establishes a mobile connection to a base station through a cellular network, and establishes a wireless connection to the first terminal device through a hotspot network. The first terminal device is configured to: obtain current WIFI network information when a service flow having a first priority and a service flow having a second priority that have to be processed exist; determine a QoE evaluation result of user experience according to the WIFI network information, the service flow having the first priority, and the service flow having the second priority, where the QoE evaluation result is used for indicating whether a WIFI network is capable of simultaneously processing the service flow having the first priority and the service flow having the second priority, and the first priority is higher than the second priority; and dispatch the service flow having the first priority to a hotspot network enabled by a second terminal device when it is determined that the QoE evaluation result indicates that the WIFI network is incapable of simultaneously processing the service flow having the first priority and the service flow having the second priority, and dispatch the service flow having the second priority to the WIFI network. The second terminal device is configured to: dispatch the service flow having the first priority transmitted by the first terminal device through the hotspot network to the base station for processing through the cellular network.

The third aspect and any implementation of the third aspect correspond to the first aspect and any implementation of the first aspect, or the second aspect and any implementation of the second aspect, respectively. Reference may be made to technical effects corresponding to the first aspect and any implementation of the first aspect or technical effects corresponding to the second aspect and any implementation of the second aspect for technical effects corresponding to the third aspect and any implementation of the third aspect, which will not be repeated herein.

According to a fourth aspect, the disclosure provides a terminal device. The terminal device includes: a memory and a processor. The memory is coupled to the processor. The memory stores program instructions. When the program instructions are performed by the processor, the terminal device is caused to perform instructions of the method according to the first aspect or any possible implementation of the first aspect, or instructions of the method according to the second aspect or any possible implementation of the second aspect.

The fourth aspect and any implementation of the fourth aspect correspond to the first aspect and any implementation of the first aspect, or the second aspect and any implementation of the second aspect, respectively. Reference may be made to technical effects corresponding to the first aspect and any implementation of the first aspect or technical effects corresponding to the second aspect and any implementation of the second aspect for technical effects corresponding to the fourth aspect and any implementation of the fourth aspect, which will not be repeated herein.

According to a fifth aspect, the disclosure provides a computer-readable medium configured to store a computer program. The computer program includes instructions used for performing the method according to the first aspect or any possible implementation of the first aspect, or instructions used for performing the method according to the second aspect or any possible implementation of the second aspect.

The fifth aspect and any implementation of the fifth aspect correspond to the first aspect and any implementation of the first aspect, or the second aspect and any implementation of the second aspect, respectively. Reference may be made to technical effects corresponding to the first aspect and any implementation of the first aspect or technical effects corresponding to the second aspect and any implementation of the second aspect for technical effects corresponding to the fifth aspect and any implementation of the fifth aspect, which will not be repeated herein.

According to a sixth aspect, the disclosure provides a computer program. The computer program includes instructions used for performing the method according to the first aspect or any possible implementation of the first aspect, or instructions used for performing the method according to the second aspect or any possible implementation of the second aspect.

The sixth aspect and any implementation of the sixth aspect correspond to the first aspect and any implementation of the first aspect, or the second aspect and any implementation of the second aspect, respectively. Reference may be made to technical effects corresponding to the first aspect and any implementation of the first aspect or technical effects corresponding to the second aspect and any implementation of the second aspect for technical effects corresponding to the sixth aspect and any implementation of the sixth aspect, which will not be repeated herein.

According to a seventh aspect, the disclosure provides a chip. The chip includes a processing circuit and a transceiver pin. The transceiver pin and the processing circuit are in communication with each other through an internal connection path. The processing circuit performs the method according to the first aspect or any possible implementation of the first aspect, or the method according to the second aspect or any possible implementation of the second aspect, to control a reception pin to receive a signal and control a transmission pin to transmit a signal.

The seventh aspect and any implementation of the seventh aspect correspond to the first aspect and any implementation of the first aspect, or the second aspect and any implementation of the second aspect, respectively. Reference may be made to technical effects corresponding to the first aspect and any implementation of the first aspect or technical effects corresponding to the second aspect and any implementation of the second aspect for technical effects corresponding to the seventh aspect and any implementation of the seventh aspect, which will not be repeated herein.

### BRIEF DESCRIPTION OF DRAWINGS

FIG. 1 is a schematic diagram illustratively showing that a terminal device having no cellular communication capability accesses a WIFI network through a router;
FIG. 2 is a schematic diagram illustratively showing an interface of conducting service processing based on a WIFI network;
FIG. 3 is a schematic diagram illustratively showing that a terminal device having no cellular communication capability is disconnected from a router;
FIG. 4 is a schematic diagram illustratively showing an interface in which a terminal device having no cellular communication capability disables a WIFI network and then conducts service processing;
FIG. 5 is a schematic diagram illustratively showing another interface in which a terminal device having no cellular communication capability disables a WIFI network and then conducts service processing;
FIG. 6 is a schematic diagram illustratively showing a hardware structure of a terminal device;
FIG. 7 is a schematic diagram illustratively showing a software structure of a terminal device of an operating system;
FIG. 8 is a schematic diagram illustratively showing a software structure of a terminal device of another operating system;
FIG. 9 illustratively shows a network selection mode of a method for multi-network coordinated operation according to an embodiment of the disclosure;
FIG. 10 is a schematic flow diagram of a method for multi-network coordinated operation in the network selection mode shown in FIG. 9;
FIG. 11 is a first schematic diagram illustratively showing an interface for providing an access for a user to select a network selection mode;
FIG. 12 is a second schematic diagram illustratively showing an interface for providing an access for a user to select a network selection mode;
FIG. 13 is a third schematic diagram illustratively showing an interface for providing an access for a user to select a network selection mode;
FIG. 14 illustratively shows another network selection mode of a method for multi-network coordinated operation according to an embodiment of the disclosure;
FIG. 15 is a schematic flow diagram of a method for multi-network coordinated operation in the network selection mode shown in FIG. 14;
FIG. 16 illustratively shows yet another network selection mode of a method for multi-network coordinated operation according to an embodiment of the disclosure;
FIG. 17 is a schematic flow diagram of a method for multi-network coordinated operation in the network selection mode shown in FIG. 16;
FIG. 18 is a schematic diagram illustratively showing a first icon and a second icon;
FIG. 19 is a first schematic diagram illustratively showing an interface in an inaccessible network environment after a multi-network coordinated operation function is enabled;
FIG. 20 is a second schematic diagram illustratively showing an interface in an inaccessible network environment after a multi-network coordinated operation function is enabled;
FIG. 21 is a third schematic diagram illustratively showing an interface in an inaccessible network environment after a multi-network coordinated operation function is enabled; and
FIG. 22 is a fourth schematic diagram illustratively showing an interface in an inaccessible network environment after a multi-network coordinated operation function is enabled.

### DESCRIPTION OF EMBODIMENTS

Technical solutions of embodiments of the disclosure will be clearly and completely described below in conjunction with the accompanying drawings of the embodiments of the disclosure. Obviously, the embodiments described are some embodiments rather than all embodiments of the disclosure. Based on the embodiments of the disclosure, all other embodiments obtained by those of ordinary skill in the art without making creative efforts fall within the protection scope of the disclosure.

A term "and/or" herein describes merely an association relationship between associated objects and represents that three relationships may exist. For example, A and/or B may represent the following three cases: only A exists, both A and B exist, and only B exists.

The terms "first", "second", etc. in the description and claims of the embodiments of the disclosure are used for distinguishing different objects, instead of describing a specific order of objects. For example, a first target object, a second target object, etc. are used for distinguishing different target objects, instead of indicating a particular order of target objects.

**In** the embodiments of the disclosure, a term such as "illustratively" or "for example" is used for indicating an example, illustration, or explanation. Any embodiment or design solution described as "illustratively" or "for example" in the embodiments of the disclosure should not be explained as being more preferred or having more advantages than another embodiment or design solution. Exactly, the term such as "illustratively" or "for example" is intended to present a related concept in a specific manner.

In the description of the embodiments of the disclosure, unless otherwise specified, "a plurality of" indicates two or more. For example, a plurality of processing units indicate two or more processing units. A plurality of systems indicate two or more systems.

To better understand technical solutions provided by the embodiments of the disclosure, before the technical solutions of the embodiments of the disclosure are described, a scene applicable to the embodiments of the disclosure is first described with reference to the accompanying drawings.

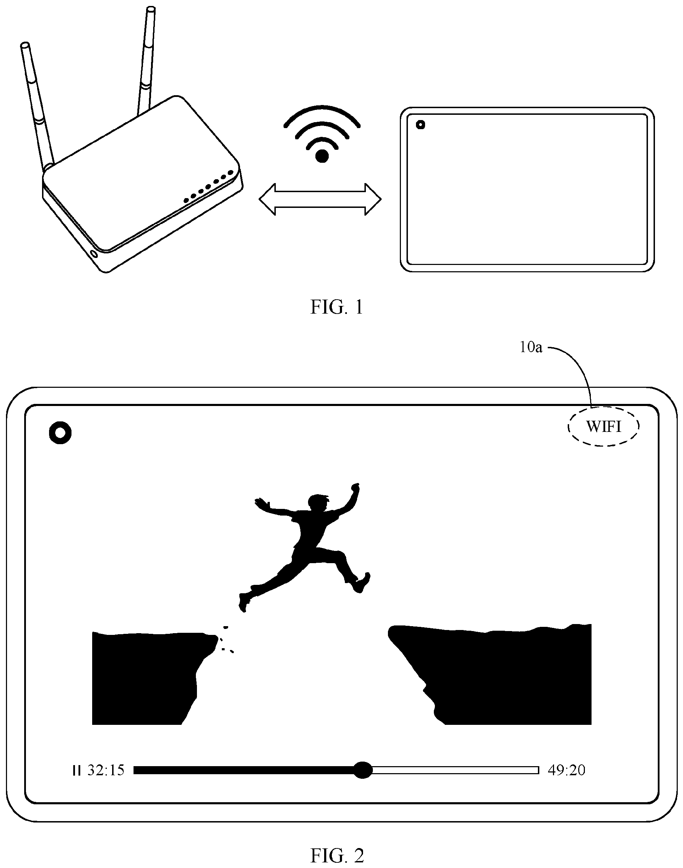

Illustratively, for some terminal devices having only a WIFI communication capability and no cellular communication capability, and for example, having only a wireless/wired network interface and no mobile network interface, or having a mobile network interface but no subscriber identity module (SIM) capable of providing a cellular network if the subscriber identity module is inserted into, when the terminal devices intend to process services that have to rely on networks, such as audio/video conferences, live streaming, or network games, in some possible implementations, the WIFI network needs to be first accessed through a wireless/wired router, and then the WIFI network may be used to process the services. As shown in FIG. 1, when a user processes a service with a tablet computer having no cellular communication capability, the user may access the WIFI network through a wireless router.

Illustratively, after the tablet computer accesses the WIFI network through the wireless router, the tablet computer may be used to watch a network video. As shown in FIG. 2, in a process of watching a network video through the WIFI network, if a user touches a current interface, in a feasible implementation, a playing progress bar of the network video and a control used to pause a current network video may be displayed, and a current network connection state of the tablet computer and a connected network may be displayed at a zone 10a.

With reference to FIG. 2, illustratively, when the tablet computer currently accesses a network and an accessed network is the WIFI network, characters "WIFI" may be displayed in the zone 10a, and indicate that the network currently accessed by the tablet computer is the WIFI network.

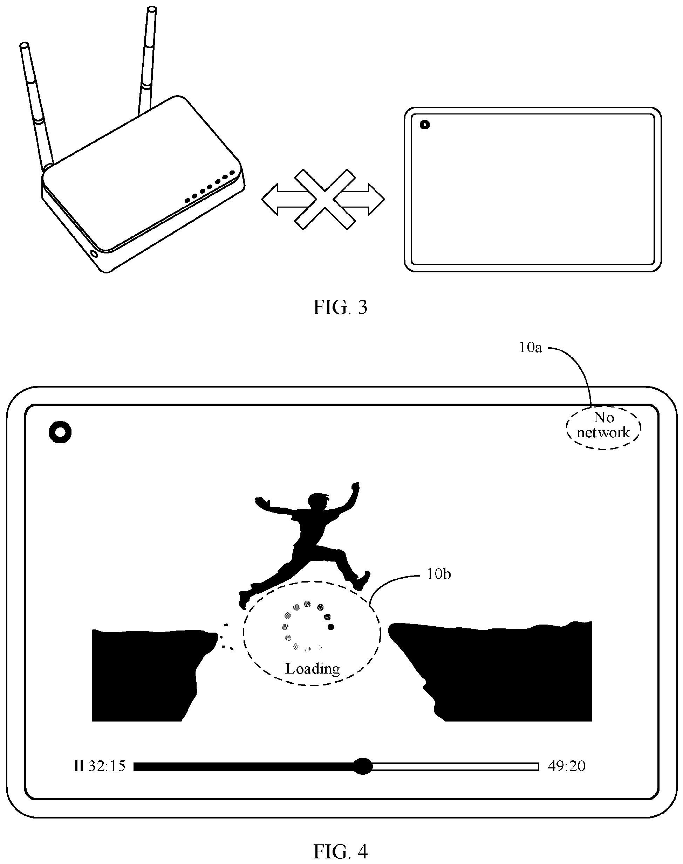

Illustratively, if a user leaves a range that may be covered by the wireless router while carrying the tablet computer, that is, leaves a place having the WIFI network, the wireless router is faulty, or the WIFI network is faulty, the tablet computer fails to access an available WIFI network, as shown in FIG. 3. In this case, the characters "WIFI" in the zone 10a on an interface of the tablet computer for playing a network video in FIG. 2 may be changed to characters "no network" in the zone 10a in FIG. 4.

With reference to FIG. 4, illustratively, in an implementation, when the tablet computer is in a network-unconnected state, an interface for currently playing a network video may display a content shown in a zone 10b. After the tablet computer re-accesses the WIFI network, the interface shown in FIG. 2 may be automatically restored to.

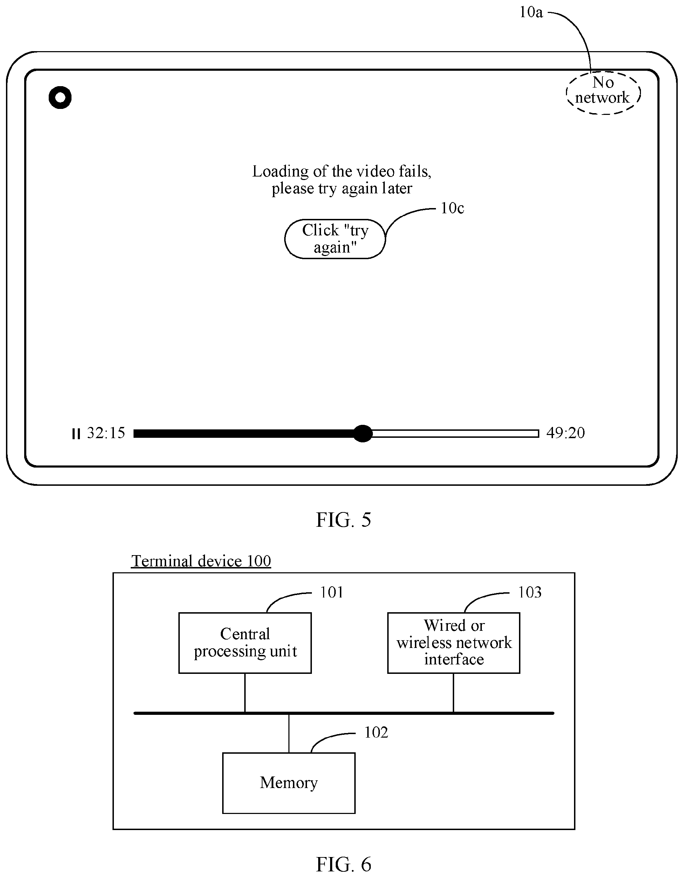

With reference to FIG. 5, illustratively, in another implementation, when the tablet computer is in a network-unconnected state, because a new data flow is not obtained, an interface of currently playing a network video may be directly changed to a blank screen, and prompt information of "Loading of the video fails, please try again later" and a control 10c for retrying of a user are displayed in the interface.

Illustratively, if the tablet computer re-accesses the WIFI network, after a user clicks on the control 10c, the tablet computer may re-obtain a data flow from a moment when a video is interrupted and display the data flow, that is, may be restored to the interface shown in FIG. 2. If the tablet computer does not access the WIFI network all the time, the user clicks on the control 10c, and the interface may not be changed.

It should be understood that what are described above are merely examples listed for better understanding of the technical solutions of the embodiment, and are not considered as a unique limitation to the embodiment.

In view of that, the disclosure provides a method for multi-network coordinated operation. The method is applied to the terminal device (referred to as a first terminal device for ease of distinguishing in the embodiment, and a terminal device providing a hotspot network is referred to as a second terminal device). Specifically, based on the method for multi-network coordinated operation according to the disclosure, for the first terminal device, when a service flow having a first priority and a service flow having a second priority that have to be processed exist, current WIFI network information is obtained. A QoE evaluation result of user experience is determined according to the WIFI network information, the service flow having the first priority, and the service flow having the second priority. The QoE evaluation result is used for indicating whether a WIFI network is capable of simultaneously processing the service flow having the first priority and the service flow having the second priority. The first priority is higher than the second priority. When it is determined that the QoE evaluation result indicates that the WIFI network is incapable of simultaneously processing the service flow having the first priority and the service flow having the second priority, the service flow having the first priority is dispatched to a hotspot network enabled by a second terminal device, and the service flow having the second priority is dispatched to the WIFI network.

In this way, a first terminal device having no cellular communication capability can process services with a second terminal device having a cellular communication capability, multi-network coordinated operation can be implemented, and further the services can be normally processed.

To better understand the technical solutions provided by the disclosure, before the technical solutions of the disclosure are described, a hardware structure of a terminal device applicable to the technical solutions of the disclosure is first described with reference to the accompanying drawings.

As seen from the scene description, in a possible implementation, a terminal device applicable to the technical solution of the disclosure is a terminal device having only a wireless/wired network interface and no mobile network interface, and for example, a tablet computer, a personal computer (PC), a notebook computer, and a large-screen device (such as a television). The terminal devices are not listed one by one herein, and are not limited by the disclosure.

Illustratively, in another possible implementation, the terminal device applicable to the technical solution of the disclosure is a terminal device having both a wireless/wired network interface and a mobile network interface and having no SIM card capable of providing a cellular network if the SIM card is inserted into, and for example, a smart phone, a wearable device (a smart watch), etc. The terminal devices are not listed one by one herein, and are not limited by the disclosure.

Illustratively, in another implementation, the terminal device applicable to the technical solution of the disclosure is a terminal device having a wireless/wired network interface, a mobile network interface and a SIM card capable of providing a cellular network if the SIM card is inserted into.

It should be understood that what are described above are merely examples listed for better understanding of the technical solutions of the embodiment, and are not considered as a unique limitation to the embodiment.

In addition, as can be seen from the description, in actual application, as long as a terminal device has a wireless/wired network interface and a WIFI communication capability, regardless of whether the terminal device has a mobile network interface and whether the terminal device may use a cellular network provided by its own SIM card currently, when the WIFI network fails to support a current service, service processing may be conducted with help of a hotspot network enabled by other terminal devices having a cellular communication capability.

FIG. 6 is a schematic diagram illustratively showing a hardware structure of a terminal device. It should be understood that the terminal device 100 shown in FIG. 6 is merely an example of a terminal device applicable to the scene, and the terminal device 100 may include more or fewer components than those shown in the figure, may combine two or more components, or may have a different component configuration. Various components shown in FIG. 6 may be implemented in hardware, software, or a combination of hardware and software including one or more signal processing and/or application specific integrated circuits.

As shown in FIG. 6, the terminal device 100 may include: a central processing unit (CPU) 101, a memory 102, and a wired/wireless network interface 103. The memory 102 stores one or more applications or data.

The central processing unit 101 may be a nerve center and command center of the terminal device 100. The central processing unit 101 may generate an operation control signal according to an instruction operation code and a sequence signal, and control obtaining and performing of instructions. The central processing unit 101 may be further provided with a memory configured to store instructions and data. In some implementations, the memory in the central processing unit 101 is a cache memory.

The memory 102 may be configured to store a computer-executable program code. The executable program code includes instructions. The memory 102 may be a volatile memory or a persistent memory. The computer-executable program code stored in the memory 102 may include one or more modules. Each module may include a series of instructions and operations for the terminal device. The memory 102 may include a program storage zone and a data storage zone.

Further, the central processing unit 101 may be configured to be in communication with the memory 102, and perform, on the terminal device 100, a series of instructions and operations in the memory 102. The central processing unit 101 runs computer program instructions stored in the memory 102, such that various functions and data processing of the terminal device 100 are performed. For example, the terminal device 100 is caused to implement the method for multi-network coordinated operation provided by the embodiments of the disclosure.

In addition, it should be noted that in some implementations, the terminal device 100 may include one or more central processing units 101, one or more memories 102, and one or more wired/wireless network interfaces, which are specifically determined according to a product type of the terminal device, a customer requirement, etc., and are not limited by the disclosure.

In addition, the terminal device 100 may further include one or more power supplies, sensors, display screens, etc., which are not listed one by one herein, and are not limited by the disclosure.

The terminal device 100 may perform operations performed by the first terminal device (the terminal device having no cellular communication capability) in the following embodiments, which will not be repeated herein.

A software system of the terminal device 100 may be of a layered architecture, an event-driven architecture, a microkernel architecture, a micro service architecture, or a cloud architecture. The embodiments of the disclosure illustrate a software structure of the terminal device 100 with a system of a layered architecture as an example.

The system of a layered architecture may be, for example, Android, Windows ServerTM (Windows for short), Mac OS XTM, UnixTM, LinuxTM, FreeBSDTM, etc., and are not listed one by one herein and not limited by the disclosure. For ease of description of the embodiment, with a Windows system and an Android system as examples, architectures of the two operating systems are described with reference to the accompanying drawings, respectively.

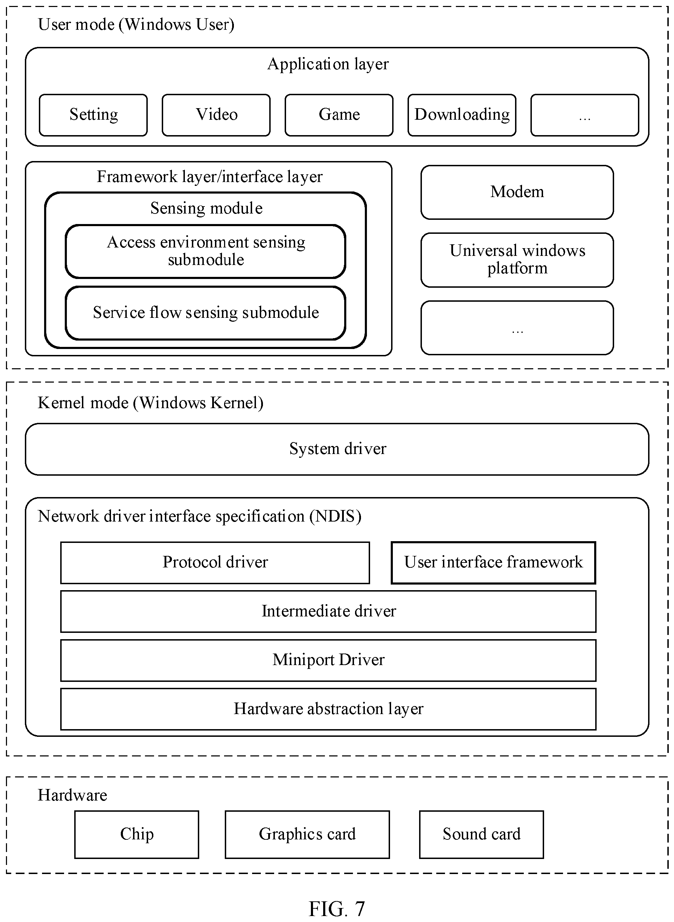

FIG. 7 is a block diagram illustratively showing a software structure when the terminal device 100 is a Windows system.

As shown in FIG. 7, the software structure of the terminal device 100 of the Windows system may be divided into a user mode (Windows User), a kernel mode (Windows Kernel), and hardware.

The user mode may include an application layer (application program layer), a framework layer/interface layer, a modem, a UWP API, etc.

Illustratively, the application layer may include applications such as setting, videos, games, and downloading. The applications are not listed one by one herein, and not limited by the disclosure.

Illustratively, the framework layer/interface layer is, for example, a Win32 API (Microsoft 32-bit platform application programming interface). The framework layer/interface layer may include various interfaces that may be invoked by the applications of the application layer. Specifically, the technical solution provided by the embodiment of the disclosure mainly involves a sensing module configured to sense an access environment and a current service flow.

It may be understood that, in some implementations, the two functions may be integrated into one functional function, or may be integrated into different functional functions. As shown in FIG. 7, an access environment sensing submodule may be separately encapsulated to sense an access environment, and a service flow sensing submodule may be encapsulated to sense a current service flow. In this way, by sensing the information, a specific concurrent scene during multi-network coordinated operation may be determined.

Illustratively, the access environment sensing submodule is specifically configured to sense a wireless network (WIFI network) environment. In some implementations, the access environment sensing submodule may sense whether an available WIFI network exists in a current location and WIFI network quality according to a plurality of parameters, such as current signal strength, a signal-to-noise ratio, noise, load, transmission queue duration, a transmission rate, a reception rate, a number of transmission bytes, a number of reception bytes, a number of transmission data packets, and a number of reception data packets of the WIFI network.

Illustratively, the service flow sensing submodule is specifically configured to sense the following information of a currently received and transmitted service flow, such as a number of data packets transmitted based on a transmission control protocol (TCP) (a number of TCP transmitted packets), a number of received data packets (a number of TCP received packets), a number of transmitted bytes (a number of TCP transmitted bytes), a number of received bytes (a number of TCP received bytes), a number of data packets transmitted based on a user datagram protocol (UDP) (a number of UDP transmitted packets), a number of received data packets (a number of UDP received packets), a number of transmitted bytes (a number of UDP transmitted bytes), a number of received bytes (a number of UDP received bytes), a round-trip delay, a packet loss rate, a retransmission rate, etc.

In this way, after the two submodules in the sensing module sense a WIFI network environment condition and related information of the currently received and transmitted service flow, the information may be handed over to a Windows presentation foundation (WPF) of a network driver layer in a kernel mode. Further, the WPF determines whether an appropriate network selection mode needs to be automatically selected with help of a hotspot network enabled by a terminal device having a cellular communication capability and according to a network selection mode selected by a user or a currently running application/service scene. Further, according to the determined network selection mode, by combining the information about the access environment and the service flow provided by the sensing module, all or some service flows are received and transmitted by the hotspot network, and the remaining service flows continue to be received and transmitted in the WIFI network.

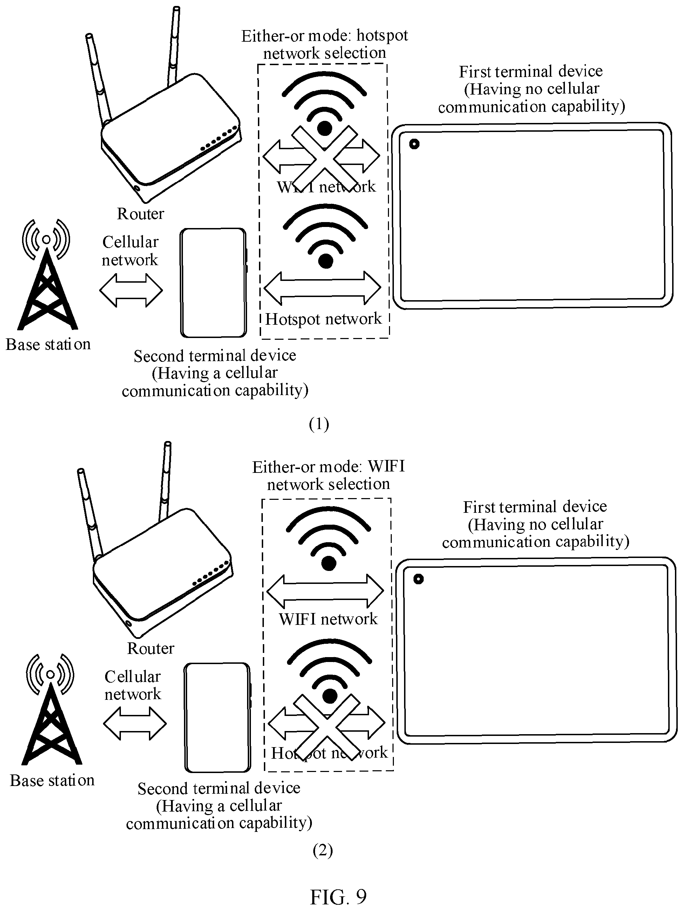

Reference is made to description of FIG. 9 to FIG. 17 below for details about a network selection mode and reception and transmission of service flows in different network selection modes, which will not be repeated herein.

In addition, it should be noted that due to different operating systems of the terminal devices, in actual application, parameters of access environment information and service flow information sensed by the sensing module may be varied, and may basically include the listed parameter content; and the other parameter information may be appropriately selected according to an actual service requirement and an operating system, and will not be repeated herein.

In addition, for determination of the currently running application/service scene, in some implementations, when an application runs at a foreground of the terminal device, a name of the currently running application may be determined according to package name information in a data flow generated when the application runs. Thus, which application is currently running may be learnt.

Illustratively, in some other implementations, for example, in a case that a specific service scene corresponding to a current application needs to be specified, for applications of a plurality of service scenes, such as an instant messaging application, audio/video calling/conferences may be implemented, files and chat information may be transmitted, or WeChat moments contents may be browsed, such that an application programming interface (API) through which the current data flow is transmitted may be further determined.

It may be understood that different service scenes generally correspond to different APIs, such that a current service scene of the terminal device may be determined by determining the currently invoked API.

Illustratively, in some other implementations, when the currently running application and the service scene fail to be determined according to the package name information and the invoked API, image identification and analysis may be conducted on a currently generated data flow through image identification, and further the currently running application/service scene is learnt according to a page content corresponding to the data flow.

It should be understood that what are described above are merely examples listed for better understanding of the technical solutions of the embodiment, and are not considered as a unique limitation to the embodiment.

In addition, it should be further noted that To facilitate later appropriate allocation of network resources with the WPF and allocate different service flows to appropriate networks, in some implementations, priorities may be divided for applications running on the terminal device or service scenes. In this way, during resource allocation, appropriate allocation may be conducted with reference to priorities of applications/service scenes, thus better satisfying use requirements of users and improving user experiences.

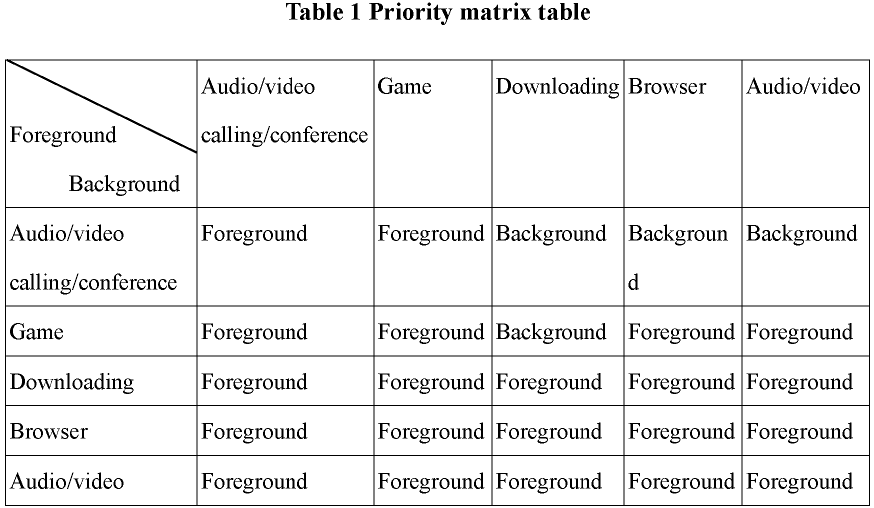

Illustratively, Table 1 provides a priority matrix table of different applications/service scenes. With reference to Table 1, a content corresponding to a row "foreground" indicates that an application/service scene of the type currently runs at the foreground of the terminal device (an activity interface exists currently). A content corresponding to a column "background" indicates that an application/service scene of the type currently runs at the background of the terminal device (no activity interface exists currently). A content in a table cell at which the "foreground" and "background" contents intersect indicates an application/service scene having a current high priority. That is, when a service is processed with a hotspot network enabled by a terminal device having a cellular communication capability, an object indicated in the table cell at which "foreground" and "background" contents intersect is an application/service scene that needs to be dispatched to the hotspot network.

Further, with reference to Table 1, illustratively, at a particular moment, when an application or service scene of an audio/video calling/conference type runs at the foreground of the terminal device, regardless of which type of application/service scene runs at the background, a priority of the application or service scene of the audio/video calling/conference type at the foreground is higher than that of the application or service scene of the audio/video calling/conference type at the background. That is, the service flow corresponding to the application or service scene of the audio/video calling/conference type that runs at the foreground needs to be dispatched to the hotspot network.

Further, with reference to Table 1, illustratively, at a particular moment, when an application or service scene of a game (an online game in the disclosure) type runs at the foreground of the terminal device, regardless of which type of application/service scene runs at the background, a priority of the application or service scene of the game type at the foreground is higher than that of the application or service scene of the game type at the background. That is, the service flow corresponding to the application or service scene of the game type that runs at the foreground needs to be dispatched to the hotspot network.

Further, with reference to Table 1, illustratively, at a particular moment, when an application or service scene of a downloading, browser or audio/video type currently runs on the terminal device, as long as an application or service scene of an audio/video calling/conference type runs at a background, a priority of the application or service scene of the audio/video calling/conference type at the background is higher than that of the application or service scene of the audio/video calling/conference type at the foreground. That is, the service flow corresponding to the application or service scene of the audio/video calling/conference type that runs at the background needs to be dispatched to the hotspot network.

Further, with reference to Table 1, illustratively, at a particular moment, when an application or service scene of a browser or audio/video type currently runs on the terminal device, as long as no application or service scene of an audio/video calling/conference type runs at a background, a priority of the application or service scene of the browser or audio/video calling type at the foreground is higher than that of the application or service scene of the browser or audio/video calling type at the background. That is, the service flow corresponding to the application or service scene of the browser or audio/video calling type that runs at the foreground needs to be dispatched to the hotspot network.

Further, with reference to Table 1, illustratively, when an application or service scene of a downloading type currently runs on the terminal device, and applications or service scenes running at a background include no application/service scene of an audio/video calling/conference type and include an application or service scene of a game type, a priority of the application or service scene of the game type at the background is higher than that of the application or service scene of the game type at a foreground. That is, the service flow corresponding to the application or service scene of the game type that runs at the background needs to be dispatched to a hotspot network. Otherwise, the priority of the application or service scene of the downloading type at the foreground is higher than that of the application or service scene of the downloading type at the background. That is, the service flow corresponding to the application or service scene of the downloading type that runs at the foreground needs to be dispatched to the hotspot network.

In addition, it should be noted that when a network speed of a background application/service scene is limited, that is, the background application/service scene is set to have a low priority, whether the application/service scene is in a preset white list (if speed limiting is not allowed, ringing needs to conducted in priority) also needs to be considered. Accordingly, when the application/service scene is in the white list, the application/service scene cannot be set to have a low priority.

In addition, it should be further noted that when priorities are set for applications/service scenes at the foreground and the background, requirements for a time delay may further be considered. For example, for an application/service scene sensitive to a time delay (high in requirements for real-time performance and a low time delay), for example, of types, such as audio/video calling/conferences, live streaming, and online education, the application/service scene may be set to have a high priority.

It should be understood that what are described above are merely examples listed for better understanding of the technical solutions of the embodiment, and are not considered as a unique limitation to the embodiment.

In this way, different priorities are allocated to different types of applications/service scenes, such that during resource allocation, the WPF may dispatch a service flow corresponding to an application/service scene having a higher priority to a network better in network quality. For example, when poor quality of a WIFI network fails to satisfy a requirement of an application/service scene having a higher priority, a service flow corresponding to the application/service scene having the higher priority may be dispatched to a hotspot network, and a service flow corresponding to an application/service scene having a lower priority may remain in the WIFI network for processing.

Further, with reference to FIG. 7, illustratively, a kernel state may include a system driver layer and a network driver layer.

For example, the system driver layer may include various system drivers, such as a native WiFi filter, an ancillary function driver, and a Winsock kernel that supports various types of transmission protocols. The drivers are not listed one by one herein, and are not limited by the disclosure.

Illustratively, the network driver layer is a network driver interface specification (NDIS) layer. The layer may include various protocol drivers, various intermediate drivers, various miniport drivers, the WPF, and a hardware abstraction layer (HAL).

Specifically, in the technical solution provided by the embodiment of the disclosure, during multi-network coordinated operation, network resource allocation in a concurrent scene is specifically implemented in the WPF. An operation conducted by a resource allocation module located on a kernel layer in the following Android system is similar to that conducted by the WPF in the embodiment. Processing logic of resource allocation of another operating system is also approximately same as that of the operation.

In the technical solution provided by the embodiment of the disclosure, during multi-network coordinated operation, network resource allocation in a concurrent scene may follow Table 2.

**Table 2 Resource allocation rule table**

| | |
|---|---|
| Selection and switching of a hotspot network | 1, Network selection and switching are conducted as follows: a hotspot having an optimal network experience is preferred in a plurality of hotspot networks, a same hotspot may be preferred for 2.4G and 5G frequency bands, and automatic fast roaming (switching) is conducted, where a user is not prompted. |
| | 2, Scoring is conducted on the hotspot networks as follows: scoring and ranking are conducted on the surrounding hotspot networks, where rankings are a basis of roaming and switching, and presented to a user in a presentation manner such as an existing WLAN list. The user may manually select a specific hotspot network on the interface. |
| Service priority | High-priority network acceleration is automatically conducted for a service data flow (at an application level) having a relatively high delay requirement such as audio/video calling\conferences, online education, or games at a foreground, and priority reduction (speed limiting) is conducted on another background service. |
| Network selection mode of multi-network coordinated operation | 1, Either-or mode: in a case without a WIFI network, a hotspot network is automatically switched to, such that service processing is conducted. After a WIFI network is restored, the WIFI network is automatically switched to, such that service processing is conducted. |
| | 2, Application-level concurrent flow-division mode: in a case that an experience cannot be ensured by a WIFI network in a service scene having a relatively high delay requirement, such as audio/video calling\conferences, online education, or games, the service flows are automatically switched to a hotspot network for processing, and service flows corresponding to other application/service scenes are still processed in the WIFI network. |
| | 3, Socket concurrent flow-division mode (concurrent flow-division mode of different service flows of a same application): when a service such as downloading requires a great bandwidth, in a case that an experience cannot be ensured by a WIFI network, the service flows are automatically switched to a hotspot network for processing, and other service flows are still processed in the hotspot network of the WIFI network. |

It should be understood that what are described above are merely examples listed for better understanding of the technical solutions of the embodiment, and are not considered as a unique limitation to the embodiment.

In addition, it should be further noted that during resource allocation, that is, a hotspot network enabled by a terminal device (a second terminal device) having a cellular communication capability is used, it is first ensured that the second terminal device enables a hotspot function, and the hotspot network is provided. Meanwhile, a terminal device (a first terminal device) currently having no cellular communication capability is capable of searching for the hotspot network and automatically accessing the hotspot network. Reference is made to the following description for details about contents of enabling a hotspot function by a second terminal device and establishing a communication connection between a first terminal device and the second terminal device, which will not be repeated herein.

As can be seen from the description, in the technical solution provided by the embodiment of the disclosure, an application service needs to be started, a data flow (a service flow) generated in a communication process of the application service may be collected after the application service is started, an application/service scene may be identified after the service flow is obtained, and a current WIFI network environment and a current service flow are sensed by a sensing module (specifically, influence factors of whether to trigger multi-network coordinated operation are extracted, and for example, are information included in the WIFI network and information included in the service flow). Further, a current quality of experience (QoE) evaluation result is determined according to the influence factors. Finally, the WPF (or a resource allocation module below) allocates resources according to the QoE evaluation result, information recorded in Table 1 and Table 2, and contents sensed by the sensing module.

Further, with reference to FIG. 7, illustratively, hardware may include chips, graphics cards, sound cards, etc. provided by various chip manufacturers, and is not listed one by one herein and not limited by the disclosure.

It may be understood that layers in the software structure shown in FIG. 7 and components included in all the layers do not constitute a specific limitation to the terminal device 100. In some other embodiments of the disclosure, the terminal device 100 may include more or fewer layers than those shown in FIG. 7, and each layer may include more or fewer components, which will not be limited by the disclosure.

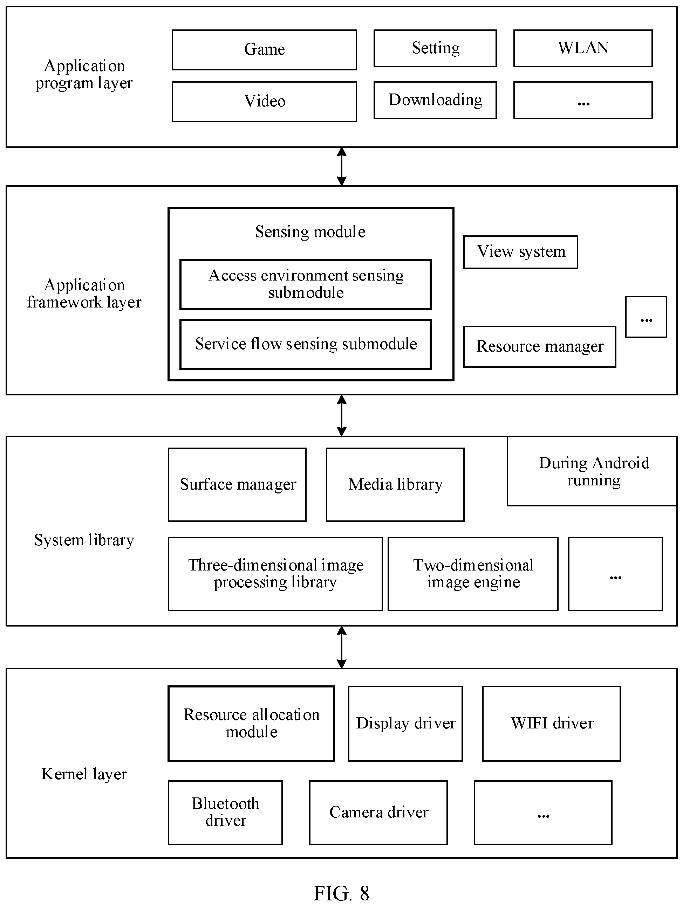

FIG. 8 is a block diagram illustratively showing a software structure when the terminal device 100 is an Android system.

As shown in FIG. 8, a layered architecture of the terminal device 100 divides software into several layers, and each layer has a clear role and task. The layers are in communication with each other through a software interface. In some implementations, the Android system is divided into four layers, including an application program layer, an application program framework layer, an Android runtime and system library, and a kernel layer from top to bottom.

The application program layer may include a series of application program packets. As shown in FIG. 8, the application program packets may include applications such as games, setting, a wireless local area network (WLAN configured to access a WIFI network), videos, and downloading, and are not listed one by one herein and not limited by the disclosure.

The application program framework layer provides an application programming interface (API) and a programming framework for the applications of the application program layer. In some implementations, the programming interfaces and programming frameworks may be described as functions. As shown in FIG. 8, the application program framework layer may include functions such as a view system, a resource manager, and a sensing module. The functions are not listed one by one herein, and not limited by the disclosure.

Illustratively, in the embodiment, the sensing module is configured to sense an access environment and a current service flow.

It may be understood that, in some implementations, the two functions may be integrated into one functional function, or may be integrated into different functional functions. As shown in FIG. 8, an access environment sensing submodule may be separately encapsulated to sense an access environment, and a service flow sensing submodule may be encapsulated to sense a current service flow. In this way, by sensing the information, a specific concurrent scene during multi-network coordinated operation may be determined. Reference is made to description of the sensing module in FIG. 7 for details, which will not be repeated herein.

In addition, it should be further noted that the view system located in the application program framework layer includes a visual control, such as a control for displaying text and a control for displaying a picture. The view system may be configured to create an application. A display interface may be composed of one or more views. For example, a display interface including a message notification icon may include a view for displaying text and a view for displaying a picture.

In addition, it should be further noted that the resource manager located in the application program framework layer provides various resources for an application, such as a localized character string, an icon, a picture, a layout file, and a video file. The resources are not listed one by one herein, and not limited by the disclosure.

The Android Runtime includes a kernel library and a virtual machine. The Android Runtime is responsible for dispatching and management of the Android system.

The kernel library includes two parts: a function that needs to invoke java language and a kernel library of Android.

The application program layer and the application program framework layer run on the virtual machine. The virtual machine performs java files of the application program layer and the application program framework layer as binary files. The virtual machine is configured to perform functions such as object lifecycle management, stack management, thread management, security and exception management, and garbage collection.

The system library may include a plurality of functional modules, such as a surface manager, media libraries, a 3D graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording of a plurality of commonly used audio and video formats, static image files, etc. The media library may support a plurality of audio and video encoding formats, such as MPEG4, H.264, MP3, AAC, AMR, JPG, and PNG.

The three-dimensional graphics processing library is configured to implement three-dimensional graphics drawing, image rendering, synthesis, layer processing, etc.

It may be understood that the 2D graphics engine is a drawing engine for 2D drawing.

In addition, it may be understood that, the kernel layer in the Android system is a layer between hardware and software. The kernel layer at least includes a display driver, a Bluetooth driver, a WIFI driver, a camera driver, a resource allocation module for a network resource in a concurrent scene during multi-network coordinated operation, etc. Reference is made to description of resource dispatching implemented in the WPF in FIG. 7 for details about network resource allocation, which will not be repeated herein.

It may be understood that layers in the software structure shown in FIG. 8 and components included in all the layers do not constitute a specific limitation to the terminal device 100. In some other embodiments of the disclosure, the terminal device 100 may include more or fewer layers than those shown in FIG. 8, and each layer may include more or fewer components, which will not be limited by the disclosure.

FIG. 9 illustratively shows a network selection mode of a method for multi-network coordinated operation according to an embodiment of the disclosure.

As shown in FIG. 9, an either-or network selection mode is provided. For the either-or network selection mode, only one network link is allowed to exist at a same moment. For example, as shown in (1) in FIG. 9, a hotspot network is selected to receive and transmit a data packet, or as shown in (2) in FIG. 9, a WIFI network is selected to receive and transmit a data packet.

Illustratively, for the scene shown in (1) in FIG. 9, when a first terminal device is located in a location without a WIFI network, and for example, an available WIFI network fails to be searched for, or a link with a router accessing the WIFI network is interrupted, causing failure to access the WIFI network, based on the method for multi-network coordinated operation provided by the embodiment of the disclosure, the first terminal device may be automatically switched to a second terminal device that enables a hotspot network, such that a data packet is received and transmitted with the hotspot network.

It should be noted that in actual application, to ensure that the method for multi-network coordinated operation provided by the embodiment of the disclosure may be successfully conducted, it is necessary to ensure that the first terminal device is capable of accessing the second terminal device and accessing the hotspot network (for the first terminal device, the hotspot network is also the WIFI network) enabled by the second terminal device.

Illustratively, in some implementations, a multi-screen coordination function is enabled for the first terminal device and the second terminal device. For example, in a case that a display interface of the first terminal device displays an interface content of the second terminal device, and an operation for the second terminal device is implemented through an interface of the second terminal device that is displayed on the display interface of the first terminal device, only a hotspot function needs to be enabled in the second terminal device. When a cellular communication capability of the second terminal device is required, the first terminal device may automatically access the hotspot network enabled by the second terminal device without conducting operations such as a hotspot search operation or a password input operation. Thus, with the cellular communication capability of the second terminal device, a network-dependent service is processed.

Illustratively, in some other implementations, when the first terminal device fails to access the WIFI network through a router (wireless or wired), if the problems shown in FIG. 3 to FIG. 5, prompt information may be displayed on an interface of the first terminal device, to prompt a user to operate the second terminal device to enable the hotspot function. Illustratively, the user may enable the hotspot function (a hotspot name and a hotspot password may be set or not) on the second terminal device, and then search for and access the hotspot network by operating the first terminal device. In this way, when the first terminal device is re-switched back to the interface shown in FIG. 4, the first terminal device may be automatically switched to the hotspot network. Then, in a process in which the second terminal device enables the hotspot network, even if the first terminal device is capable of accessing the WIFI network through the router, in a case that services need to be concurrently processed with the WIFI network and the hotspot network, the hotspot network may continue to be used.

Illustratively, in some other implementations, the first terminal device may be set to initiate a hotspot request to a second terminal device that is registered and logged in to with a same device account, such that the second terminal device in a set zone with the first terminal device may automatically enable the hotspot network in response to the request, and a first terminal is set to automatically access the hotspot network.

For example, a case of using the same device account indicates that when the first terminal device is activated, an account A is registered and logged in to, if a second terminal device using the same account A is attached, the second terminal device located in the set zone with the first terminal device may receive the hotspot request transmitted by the first known device.

Illustratively, the hotspot request may be tramsmitted in a broadcast form, or in a Bluetooth form. The form is not limited by the disclosure.

Illustratively, in some other implementations, the first terminal device may be set to the second terminal device also provided with a currently used application, and in a case that an account for logging in to the application on the second terminal device is a same user account, the first terminal device may be set to initiate a hotspot request, such that the second terminal device in the set zone with the first terminal device may automatically enable the hotspot network in response to the request, and a first terminal is set to automatically access the hotspot network.

It should be understood that what are described above are merely examples listed for better understanding of the technical solutions of the embodiment, and are not considered as a unique limitation to the embodiment.

Illustratively, for the scene shown in (2) in FIG. 9, when the first terminal device re-accesses the WIFI network through the router, in order to reduce consumption of cellular traffic of the second terminal device, the first terminal device may be automatically switched from the hotspot network back to the WIFI network, and a data packet is received and transmitted by the WIFI network.

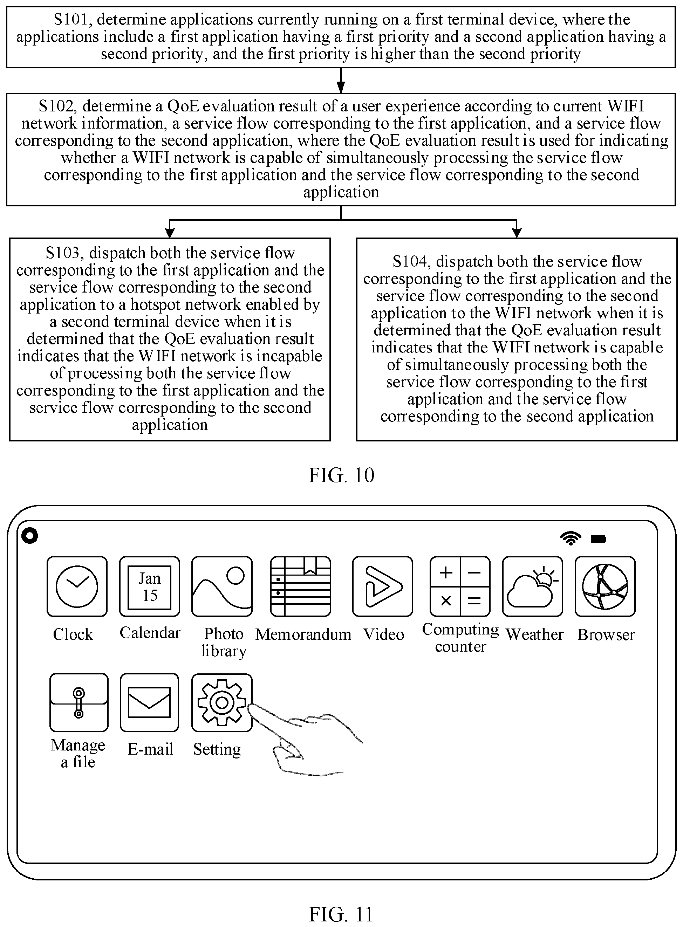

When FIG. 10 illustratively shows an either-or network selection mode shown in FIG. 9, a specific implementation flow of the method for multi-network coordinated operation provided by the embodiment of the disclosure is as follows:

S101, applications currently running on a first terminal device are determined. The applications include a first application having a first priority and a second application having a second priority. The first priority is higher than the second priority.

Illustratively, in some implementations, all the applications currently running on the first terminal device may be applications running at a foreground. For example, an instant messaging application is used to transmit a file or a message while an audio/video application is used to watch audio/video contents in a small window mode.

Illustratively, in some other implementations, all the applications currently running on the first terminal device may correspond to programs running at a background. For example, an application of a downloading type is used to download a file, and meanwhile, an application of a music playing type is used to play music at the background.

Illustratively, in some other implementations, some applications currently running on the first terminal device may be applications running at a foreground, and the other applications run at a background. For example, an application of a downloading type is used to download a file at the background, and an application of a video playing type is used to watch a video at the foreground.

It should be understood that what are described above are merely examples listed for better understanding of the technical solutions of the embodiment, and are not considered as a unique limitation to the embodiment.

For determination of the application currently running on the first terminal device, for example, packet name information included in the currently obtained service flow is extracted, and further the application providing the service flow, that is, the currently running application, may be determined according to the packet name information.

In addition, whether the currently running program runs at the foreground or at the background may be identified, for example, by determining whether the application has an active window (interface) in a display interface of the first terminal device. If yes, the application is the application running at the foreground. If no, the application is the application running at the background.

Accordingly, after identification and determination of the corresponding program running in the first terminal device are completed, a priority of the program may be determined according to attribute information (which indicates a type of the application) corresponding to the application and whether the application is located at the foreground or the background.

It may be understood that the priority of each application may be determined according to Table 1 provided above for example.

It should be understood that what are described above are merely examples listed for better understanding of the technical solutions of the embodiment, and are not considered as a unique limitation to the embodiment.

In the embodiment, at least two applications currently run on the first terminal device, and priorities of the two applications are different. For example, the applications are the first application having the first priority (higher priority) and the second application having the second priority (lower priority).

In addition, it should be noted that in some implementations, same applications running in different first terminal devices may be set to have a same priority. For example, same applications A have a same priority on a terminal device A, a terminal device B, and a terminal device C that have no cellular communication capability. In this way, a data table used for indicating an application priority as shown in Table 1 may be uniformly managed and maintained by a server, and then delivered to a corresponding first terminal device or reserved in the server. During priority determination, the first terminal device asks the server to feed back a corresponding priority by transmitting information such as a name of the determined application to the server.

It should be understood that what are described above are merely examples listed for better understanding of the technical solutions of the embodiment, and are not considered as a unique limitation to the embodiment.

Illustratively, in some other implementations, same applications running in different first terminal devices may be set to have different priorities. For example, same applications A have the first priority on the terminal device A have no cellular communication capability, and have the second priority on the terminal device B. In this way, the priority of the application may be set according to a requirement of a user actually using the terminal device, thus achieving an effect of varying with each individual.

For the implementation scene, in an implementation, for example, when a multi-network coordinated operation function is enabled, an access for setting a priority for a currently configured application may be provided.

Illustratively, in another implementation, a priority matrix table applicable to the user may be automatically generated according to historical usage habits of the user.

It should be understood that what are described above are merely examples listed for better understanding of the technical solutions of the embodiment, and are not considered as a unique limitation to the embodiment.

Similarly, the service scene included in the same application may be set based on the logic. That is, priorities of same service scenes in different first terminal devices may be same or not. A specific implementation will not be repeated herein.

S102, a QoE evaluation result of user experience is determined according to current WIFI network information, the service flow corresponding to the first application, and the service flow corresponding to the second application. The QoE evaluation result is used for indicating whether the WIFI network is capable of simultaneously processing the service flow corresponding to the first application and the service flow corresponding to the second application.

The QoE evaluation result needs to be evaluated and determined according to the WIFI network information sensed by an access environment sensing submodule and service flow information sensed by a service flow sensing submodule. Specific parameters and determination standards that need to be used in evaluation may be set according to an actual service requirement, and are not limited herein.

S103, when it is determined that the QoE evaluation result indicates that the WIFI network is incapable of processing both the service flow corresponding to the first application and the service flow corresponding to the second application, both the service flow corresponding to the first application and the service flow corresponding to the second application are dispatched to the hotspot network enabled by the second terminal device.

It may be understood that such a scene is a case shown in (1) in FIG. 9 for example.

S104, when it is determined that the QoE evaluation result indicates that the WIFI network is capable of simultaneously processing both the service flow corresponding to the first application and the service flow corresponding to the second application, both the service flow corresponding to the first application and the service flow corresponding to the second application are dispatched to the WIFI network.

It may be understood that such a scene is a case shown in (2) in FIG. 9 for example.

In addition, as can be seen from the description, in order to ensure that the first terminal device is capable of dispatching the service flow corresponding to the first application to the hotspot network enabled by the second terminal device, before the service flow corresponding to the first application is dispatched to the hotspot network enabled by the second terminal device, the first terminal device may first determine whether the multi-network coordinated operation function is enabled currently. That is, based on the method for multi-network coordinated operation provided by the embodiment of the disclosure, a function of processing a service with a terminal device having a cellular communication capability is achieved.

Accordingly, if the function is enabled, when it is determined that the QoE evaluation result indicates that the WIFI network is incapable of processing both the service flow corresponding to the first application and the service flow corresponding to the second application, the first terminal device may automatically dispatch both the service flow corresponding to the first application and the service flow corresponding to the second application to the hotspot network enabled by the second terminal device. Otherwise, if the function is not enabled, both the service flow corresponding to the first application and the service flow corresponding to the second application cannot be dispatched to the hotspot network enabled by the second terminal device. In this case, in order to facilitate use, the user may be prompted in a current interface pop-up window to enable the function.

Illustratively, in some implementations, an access (a first access) for enabling the function may be directly provided in the pop-up window. In this way, the user finds and enables the access for enabling the function from a specified interface without exiting a current interface, and directly conducts an operation on, for example, clicks on, the first access, thus enabling the function. Accordingly, after the function is enabled, the first terminal device may automatically dispatch both the service flow corresponding to the first application and the service flow corresponding to the second application to the hotspot network enabled by the second terminal device.

In addition, it should be further noted that when it is determined that the user enables the function (the multi-network coordinated operation function), whether the first terminal device currently accesses an available hotspot network, for example, the hotspot network enabled by the second terminal device, may be further determined.

Accordingly, if the first terminal device accesses the available hotspot network, the first terminal device may automatically dispatch both the service flow corresponding to the first application and the service flow corresponding to the second application to the hotspot network enabled by the second terminal device. Otherwise, if the first terminal device does not access the available hotspot network, the hotspot network enabled by the second terminal device needs to be first accessed, and then both the service flow corresponding to the first application and the service flow corresponding to the second application may be dispatched to the hotspot network enabled by the second terminal device.

For example, a method for the first terminal device to access the hotspot network enabled by the second terminal device may be as follows: hotspot network information (hotspot networks enabled by all third terminal devices having a cellular communication capability within a connection range) within the connection range is searched for, and then a hotspot network optimal in network quality is automatically selected from the hotspot network information as a hotspot network that needs to be accessed, that is, the hotspot network enabled by the second terminal device may be accessed.

Illustratively, in some other implementations, in order to improve participation of a user and better satisfy an actual requirement of the user, the hotspot network information searched for may be displayed in the display interface of the first terminal device. In this way, the user may select a secure and available hotspot network.

Accordingly, when a selection operation of the user for the hotspot network in the hotspot network information is received, the hotspot network provided by the third terminal device selected by the user may be accessed as the hotspot network of the second terminal device.

It should be understood that what are described above are merely examples listed for better understanding of the technical solutions of the embodiment, and are not considered as a unique limitation to the embodiment.

In addition, as can be seen from the description, when a multi-screen coordinated connection is established between the first terminal device and the second terminal device, for example, when the display interface of the first terminal device displays a current interface content of the second terminal device, and the user may operate through an interface of the second terminal device displayed in the first terminal device and then control the second terminal device to respond accordingly, the first terminal device may directly control the second terminal device to enable a hotspot network, and further access the hotspot network.

In this way, in the method for multi-network coordinated operation provided by the embodiment, when the WIFI network currently accessed by the first terminal device is unavailable, a service is processed with a hotspot network enabled by the second terminal device having a cellular communication capability, thus ensuring that the first terminal device having no cellular communication capability may process a network-dependent service in a scene without an available WIFI network, service interruption is avoided, and user experience is ensured.

It may be understood that, in order to improve user participation, in actual application, a user access may be provided, and the user selects a network selection mode as required, and for example, the either-or network selection mode, the application-level concurrent flow-division network selection mode, and the network selection mode of concurrent flow-division of different service flows of a same application.

Illustratively, in some implementations, the user access may be integrated into an application that specially manages the multi-network coordinated operation function, or may be integrated into a setting application. The embodiment is described with reference to the accompanying drawings with integration into the setting application as an example.

With reference to FIG. 11, illustratively, with a tablet computer as the first terminal device described herein as an example, a home page of the tablet computer is displayed on a display interface of the tablet computer. The home page includes one or more controls, and for example, an icon of a configured application, a power level icon, and a WIFI icon. Illustratively, after a user clicks on an icon of the setting application displayed in the home page, the tablet computer enables the setting application in response to an operation behavior of the user, and displays a setting interface, as shown in FIG. 12.

With reference to FIG. 12, illustratively, a setting interface of a tablet computer having a large screen area may be divided into a zone 10a and a zone 10b. One or more setting function options may be displayed in the zone 10a, such as "more connections", "desktops and wallpapers", "display and brightness", "multi-network coordination", "sound and vibration", "notification", "battery", "storage", and search controls used for the user to search for the setting function options, and are not listed one by one herein and are not limited by the embodiment.

It should be noted that, in some implementations, a setting function option of "multi-network coordination" may be directly displayed in the zone 10a as shown in FIG. 12. For the scene, if the user directly selects the function of "multi-network coordination", a content of setting a multi-network coordination function may be displayed in the zone 10b.

Illustratively, in some other implementations, a setting function option of "multi-network coordination" may alternatively be set under a catalog of other setting function options displayed in the zone 10a. Corresponding to the scene, if the user selects the setting function option, a setting access of "multi-network coordination" may be displayed in a content displayed in the zone 10b. The embodiment uses the form shown in FIG. 12 as an example.

Further, with reference to FIG. 12, illustratively, in some implementations, a multi-network coordination function is disabled by default, that is, a control 10b-1 configured to enable the multi-network coordination function is in a form shown in FIG. 12.

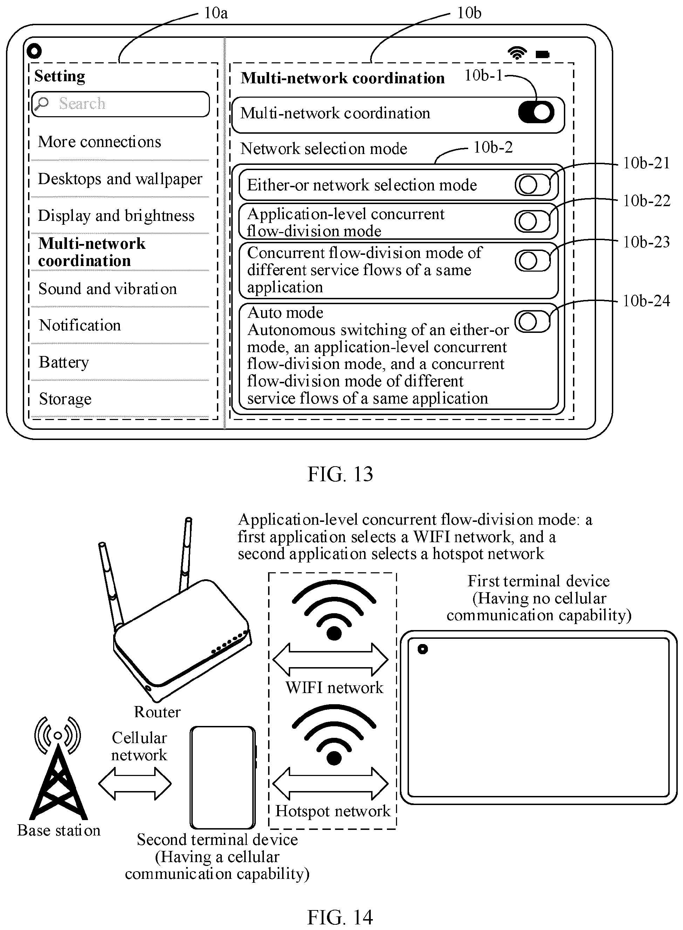

Illustratively, after the user clicks on the control 10b-1 shown in FIG. 12, the tablet computer enables the multi-network coordination function in response to an operation behavior of the user, and a form of the control 10b-1 is switched to a form shown in FIG. 13.

Illustratively, the user may conveniently autonomously set a network selection mode followed when the tablet computer conducts a multi-network coordinated operation after the multi-network coordination function is enabled. After the form of the control 10b-1 is switched to the form shown in FIG. 13, a control 10b-2 configured to select a network selection mode may further be displayed in the zone 10b, as shown in FIG. 13.

With reference to FIG. 13, illustratively, the control 10b-2 configured to select the network selection mode may provide a control 10b-21 configured to select an "either-or network selection mode", a control 10b-22 configured to select an "application-level concurrent classification mode", and a control 10b-23 configured to select a "concurrent flow-division mode of different service flows of a same application".

Illustratively, in some implementations, the control 10b-21, the control 10b-22, and the control 10b-23 are all not enabled by default, that is, in the form shown in FIG. 13. In this way, after the multi-network coordination function is enabled and the control 10b-2 is displayed in the zone 10b, the user may choose to enable any one or several network selection modes shown in FIG. 13 according to an actual use requirement of the user.

Illustratively, when the user enables only one network selection mode of the control 10b-21, the control 10b-22, and the control 10b-23, in a process of enabling the multi-network coordination function, when an abnormality occurs in a WIFI network accessed by the tablet computer, operation is conducted according to only the currently enabled network selection mode. For example, when only the either-or network selection mode is selected, only one network may be selected at a same moment, and the WIFI network and the hotspot network are not allowed to be simultaneously operated.

Illustratively, when the user enables a plurality of network modes of the control 10b-21, the control 10b-22, and the control 10b-23, in a process of enabling the multi-network coordination function, when an abnormality occurs in the WIFI network accessed by the tablet computer, according to a current WIFI network condition, service processing may be conducted according to an appropriate network selection mode. For example, when the controls 10b-22 and 10b-23 are enabled simultaneously, different service flows of each application may be concurrently divided while application-level concurrent flow-division is conducted.

It should be understood that what are described above are merely examples listed for better understanding of the technical solutions of the embodiment, and are not considered as a unique limitation to the embodiment.

In addition, it should be further noted that to reduce user operations, a control 10b-24 configured to select an "autonomous mode" may be further provided in a control 10b-2. In a case that the "autonomous mode" is enabled, no matter whether the control 10b-21, the control 10b-22, and the control 10b-23 are enabled, in a process of enabling the multi-network coordination function, the tablet computer may be autonomously switched between the either-or network selection mode, the application-level concurrent flow-division mode, and a non-classification mode of different services of a same application according to the current WIFI network condition and the source (the application/service scene) of the service flow that needs to be processed, such that a multi-network coordinated operation effect is better.

In addition, it should be further understood that, for a terminal device having a small screen area, such as a mobile phone or a smart watch, when a setting application is enabled to enter a setting interface by clicking on an icon of the setting application, only a content in the zone 10a may be displayed on the display interface. After the user clicks on a multi-network coordination control, the terminal device skips to an interface of the content in the display zone 10b in response to an operation behavior of the user.

It should be understood that what are described above are merely examples listed for better understanding of the technical solutions of the embodiment, and are not considered as a unique limitation to the embodiment.

FIG. 14 illustratively shows another network selection mode of a method for multi-network coordinated operation according to an embodiment of the disclosure.

As shown in FIG. 14, an application-level concurrent flow-division network selection mode is provided. For the application-level concurrent flow-division network selection mode, two network links both exist at a same moment. That is, in FIG. 14, a WIFI network link accessed by a first terminal device through a router and a hotspot network link accessed by a second terminal device exist simultaneously. Reference is made to the above description for details about contents of enabling a hotspot function by the second terminal device and accessing, by a first terminal device, a hotspot network enabled by the second terminal device, which will not be repeated herein.

Illustratively, in a case that the user selects the application-level concurrent flow-division network selection mode, when a plurality of applications in the first terminal device are running (a network is used to receive and transmit a data packet), the first terminal device may sense service flows (data packets) provided by different applications and a requirement of a service scene currently processed by each application for a network through a sensing module, such that a data packet of an application having a high network requirement (for example, a high delay requirement and a high bandwidth requirement) is received and transmitted by a hotspot network, and a data packet of an application having a low network requirement (for example, a low delay requirement and a low bandwidth requirement) is received and transmitted by a WIFI network. Thus, a processing effect of concurrent flow-division is achieved.

Illustratively, the applications having a high network requirement (for example, having a high delay requirement and a high bandwidth requirement), such as audio/video conferences, audio/video playing, online education, and online games, are not listed one by one herein, and are not limited by the disclosure.

Illustratively, the applications having a low network requirement (for example, having a low delay requirement and a low bandwidth requirement), such as instant messaging and E-mail, are not listed one by one herein, and are not limited by the disclosure.

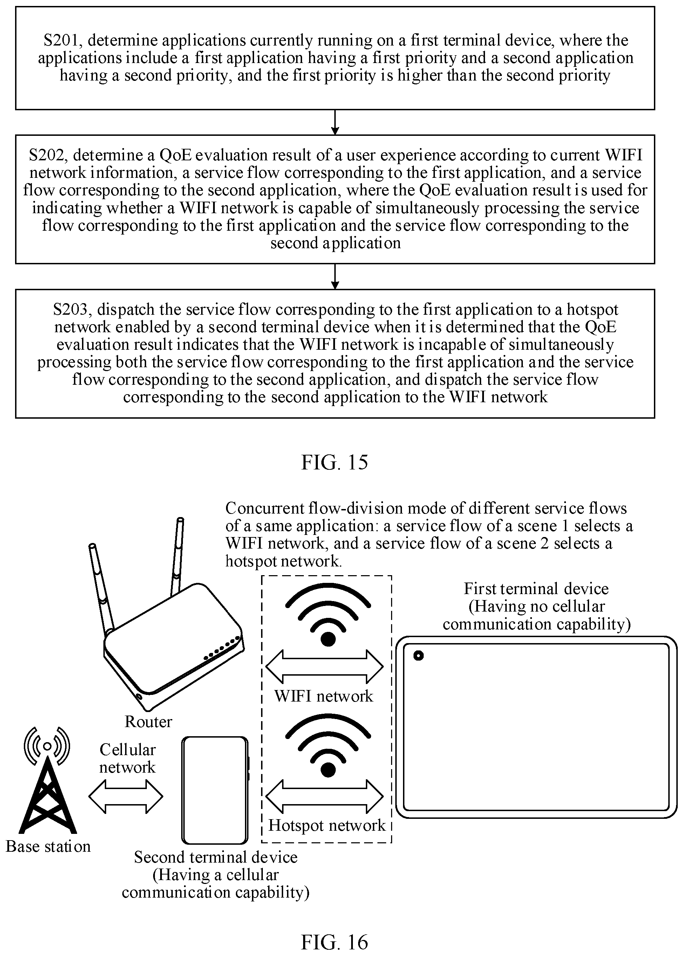

When FIG. 15 illustratively shows an application-level concurrent flow-division network selection mode shown in FIG. 14, a specific implementation flow of the method for multi-network coordinated operation provided by the embodiment of the disclosure is as follows:

S201, applications currently running on a first terminal device are determined. The applications include a first application having a first priority and a second application having a second priority. The first priority is higher than the second priority.

S202, a QoE evaluation result of user experience is determined according to current WIFI network information, a service flow corresponding to the first application, and a service flow corresponding to the second application. The QoE evaluation result is used for indicating whether a WIFI network is capable of simultaneously processing the service flow corresponding to the first application and the service flow corresponding to the second application.

Reference may be made to S101 and S102 in the embodiments for implementation details about S201 and S202, which will not be repeated herein.

S203, when it is determined that the QoE evaluation result indicates that the WIFI network is incapable of simultaneously processing both the service flow corresponding to the first application and the service flow corresponding to the second application, the service flow corresponding to the first application is dispatched to a hotspot network enabled by a second terminal device, and the service flow corresponding to the second application is dispatched to the WIFI network.

In this way, according to the method for multi-network coordinated operation provided by the embodiment, when it is determined that a WIFI network currently accessed by the first terminal device fails to satisfy service demands of a plurality of applications that are running in the first terminal device, the WIFI network and the hotspot network enabled by the second terminal device are used simultaneously, a data packet of an application having a high requirement for a delay is received and transmitted by the hotspot network, and data packets of the other applications are reserved in the WIFI network for reception and transmission. Thus, not only normal processing of services of a plurality of applications in a running state can be ensured, but also consumption of cellular traffic can be reduced.

FIG. 16 illustratively shows yet another network selection mode of a method for multi-network coordinated operation according to an embodiment of the disclosure.

As shown in FIG. 16, a network selection mode of concurrent flow-division of different service flows of a same application is provided. For the concurrent flow-division mode of different service flows of the same application, two network links both exist at a same moment. That is, in FIG. 16, a WIFI network link accessed by a first terminal device through a router and a hotspot network link accessed by a second terminal device exist simultaneously. Reference is made to the above description for details about contents of enabling a hotspot function by the second terminal device and accessing, by a first terminal device, a hotspot network enabled by the second terminal device, which will not be repeated herein.

Illustratively, in a case that a user selects a network selection mode of concurrent flow-division of different service flows, when an application currently running in the first terminal device includes various service scenes, and for example, an application has a service scene of audio/video calling/conferences, and a service scene of simply transmitting an instant message or a file, in a process in which the user uses the application to conduct audio/video calling/conferences, the user further transmits or receives a file to a contact. In addition, if a sensing module senses that a currently accessed WIFI network fails to simultaneously support reception and transmission of data packets generated in the two service scenes, a resource allocation module may distribute the data packets through different networks according to corresponding network requirements of different service scenes sensed by the sensing module. For example, in a service scene having a high network requirement (for example, a high delay requirement and a high bandwidth requirement), for example, a data packet corresponding to an audio/video calling/conferences is received and transmitted by the hotspot network. In a service scene having a low network requirement (for example, a low delay requirement and a low bandwidth requirement), for example, a data packet of file or message transmission is received and transmitted by the WIFI network. Thus, a processing effect of concurrent flow-division is achieved.

When FIG. 17 illustratively shows a concurrent flow-division network selection mode of different service flows of a same application shown in FIG. 16, a specific implementation flow of the method for multi-network coordinated operation provided by the embodiment of the disclosure is as follows:

S301, applications currently running on a first terminal device are determined. The applications include a first application having a first priority and a second application having a second priority. The first priority is higher than the second priority.

S302, a QoE evaluation result of user experience is determined according to current WIFI network information, a service flow corresponding to the first application, and a service flow corresponding to the second application. The QoE evaluation result is used for indicating whether a WIFI network is capable of simultaneously processing the service flow corresponding to the first application and the service flow corresponding to the second application.

Reference may be made to S101 and S102 in the embodiments for implementation details about S301 and S302, which will not be repeated herein.

S303, when it is determined that the QoE evaluation result indicates that the WIFI network is incapable of simultaneously processing both the service flow corresponding to the first application and the service flow corresponding to the second application, a service flow corresponding to a service scene having a higher priority in the first application is dispatched to a hotspot network enabled by a second terminal device, a service flow corresponding to a service scene having a lower priority is dispatched to the WIFI network, a service flow corresponding to a service scene having a higher priority in the second application is dispatched to the hotspot network enabled by the second terminal device, and a service flow corresponding to a service scene having a lower priority is dispatched to the WIFI network.

Specifically, for concurrent processing of different service flows in a same application, a source of a service flow corresponding to the application needs to be determined during specific implementation. Specifically, in the embodiment, for example, a source of the service flow corresponding to the first application needs to be determined, and a source of the service flow corresponding to the second application needs to be determined, that is, a source of each service flow that needs to be processed.

Illustratively, when the service flow is from one service scene, network resource allocation is conducted according to priorities corresponding to the applications. For example, when the service flow corresponding to the first application is from one service scene, the service flow corresponding to the first application is dispatched to the hotspot network enabled by the second terminal device according to a priority (the first priority) corresponding to the first application. Accordingly, when the service flow corresponding to the second application is from a service scene, the service flow corresponding to the second application is dispatched to the WIFI network according to a priority (the second priority) corresponding to the second application.

Illustratively, when the source of the service flow at least includes two service scenes, network resource allocation is conducted on a service flow generated in each service scene according to a priority of the service scene. For example, the service flow corresponding to the service scene having the higher priority in the first application is dispatched to the hotspot network enabled by the second terminal device, and the service flow corresponding to the service scene having the lower priority is dispatched to the WIFI network. Accordingly, the service flow corresponding to the service scene having the higher priority in the second application is dispatched to the hotspot network enabled by the second terminal device, and the service flow corresponding to the service scene having the lower priority is dispatched to the WIFI network.

For example, a method for determining a source of a service flow may be as follows: a number of service scenes included in an application providing the service flow is determined.

Accordingly, when it is determined that a number of the service scene is 1, it is determined that the service flow is from a service scene. When it is determined that the number of service scenes is greater than 1, an application programming interface invoked when the application (the first application or the second application) provides the service flow is determined.

It may be understood that, in general cases, different application programming interfaces correspond to different service scenes. Thus, when the application programming interface invoked when the service flow is provided is determined, de-duplication is conducted on the invoked application programming interface, and the number of service scenes when the service flow is provided may be determined according to a number of the invoked application programming interfaces after de-duplication.

It should be understood that what are described above are merely examples listed for better understanding of the technical solutions of the embodiment, and are not considered as a unique limitation to the embodiment.

In this way, in the method for multi-network coordinated operation provided by the embodiment, when it is determined that the application currently running in the first terminal device has a plurality of service scenes, and the WIFI network currently accessed by the first terminal device fails to satisfy reception and transmission of data packets generated in the service scenes having high bandwidth and delay requirements in the service scenes, the WIFI network and the hotspot network enabled by the second terminal device are used simultaneously, data packets generated in the service scenes having high delay and bandwidth requirements are received and transmitted by the hotspot network, and data packets generated in other service scenes are reserved in the WIFI network for reception and transmission. Thus, not only normal processing of data packets in different service scenes of a same application can be ensured, but also consumption of cellular traffic can be reduced.

In addition, it may be understood that, in order to achieve the functions, the terminal device includes corresponding hardware and/or software modules for performing all the functions. By combining algorithm steps of all the examples described in the embodiments disclosed herein, the disclosure may be implemented in a form of hardware or a combination of hardware and computer software. Whether some function is performed in a mode of hardware or of computer software driving hardware depends on a specific application and design constraints of the technical solution. Those skilled in the art may use different methods to implement the described functions for each specific application with reference to the embodiments, but such implementation should not be considered to fall beyond the scope of the disclosure.

In addition, it should be noted that in actual application, the first terminal device may be set to be automatically switched between the three network selection modes. That is, when the multi-network coordinated operation function is enabled, three network modes are checked by default. In this way, in a subsequent process of using the first terminal device, a sensing module determines a network selection mode to which a current service scene is applicable, and a resource allocation module dispatches different service flows to different networks, such as a WIFI network or a hotspot network, based on a corresponding network selection mode. Thus, a multi-network coordinated operation is more consistent with an actual scene, a use requirement of a user is better satisfied, and user experience is improved.

To better understand a change of an interface of the first terminal device when the first terminal device conducts the multi-network coordinated operation according to a network selection mode set by a user or a network selection mode automatically selected by a system according to a network condition when a service flow needs to be processed after the multi-network coordinated operation function is enabled through the method described in the embodiment, detailed description will be provided with reference to FIG. 18 to FIG. 22.

FIG. 18 illustratively shows an icon form (referred to as a first icon in the embodiment) displayed on the first terminal device, for example, a tablet computer, after a WIFI network is accessed, and an icon form (referred to as a second icon in the embodiment) displayed on the first terminal device after a hotspot network enabled by the second terminal device is accessed. Illustratively, the first icon may be as shown in (a1) in FIG. 18 or (a2) in FIG. 18. The second icon may be as shown in (b 1) in FIG. 18, (b2) in FIG. 18, or (b3) in FIG. 18.

It should be understood that what are described above are merely examples listed for better understanding of the technical solutions of the embodiment, and are not considered as a unique limitation to the embodiment. For ease of description, the embodiment uses a case that the first icon is shown in (a1) in FIG. 18 and the second icon is shown in (b2) in FIG. 18 as an example.

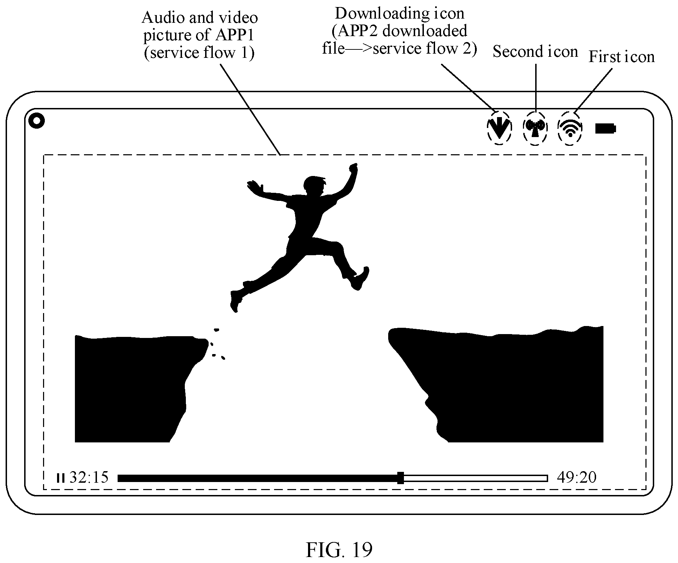

With reference to FIG. 19, illustratively, after the first terminal device is a tablet computer, and a user enables a multi-network coordinated operation function through the method provided by the embodiment, and sets a network selection mode to be an application-level concurrent flow-division mode (in which a control 10b-22 is selected and is in an enabled state, for example, in a form of a control 10b-1) or an automatic mode (in which a control 10b-24 is selected and is in an enabled state, for example, in a form of a control 10b-1), if a WIFI network and a hotspot network are available currently, the tablet computer may access the WIFI network and the hotspot network, and a display interface may display both the first icon and the second icon.

Further, with reference to FIG. 19, illustratively, when APP1 runs at a foreground of the tablet computer and a user uses the APP1 to watch an audio/video picture, the user needs to process a service flow 1 corresponding to the audio/video picture of the APP1 with a network resource. For example, a service flow corresponding to the audio/video picture is obtained from a server corresponding to the APP1, and is displayed on a display interface of the tablet computer. In a process of watching the audio/video picture through the APP1, if the user further uses APP2 to download a file at a background, a downloading icon may be displayed on the display interface of the tablet computer. As shown in FIG. 19, the downloading icon indicates that the APP2 runs a downloaded file at the background. In this case, a service flow 2 corresponding to the downloaded file needs to be processed with network resources. In a scene where a plurality of service flows corresponding to two applications as shown in FIG. 19 need to be processed with network resources simultaneously, the service flow having a higher priority in the service flow 1 and the service flow 2 may be dispatched to the hotspot network indicated by the second icon, and the service flow having a lower priority may be dispatched to the WIFI network indicated by the first icon.

Illustratively, as can be seen from the description of the priority matrix table shown in Table 1 in the embodiment, a priority of a service flow generated in an application or a service scene of an audio/video type that runs at the foreground is higher than that of an application or a service scene of a downloading type that runs at the background. Thus, in a case that the service flow 1 is of an audio/video type and the service flow 2 is of a downloading type, a priority of the service flow 1 is higher than a priority of the service flow 2. Thus, the service flow 1 may be dispatched to the hotspot network indicated by the second icon, and the service flow 2 may be dispatched to the WIFI network indicated by the first icon. In this way, concurrent flow-division of service flows corresponding to different applications is implemented.

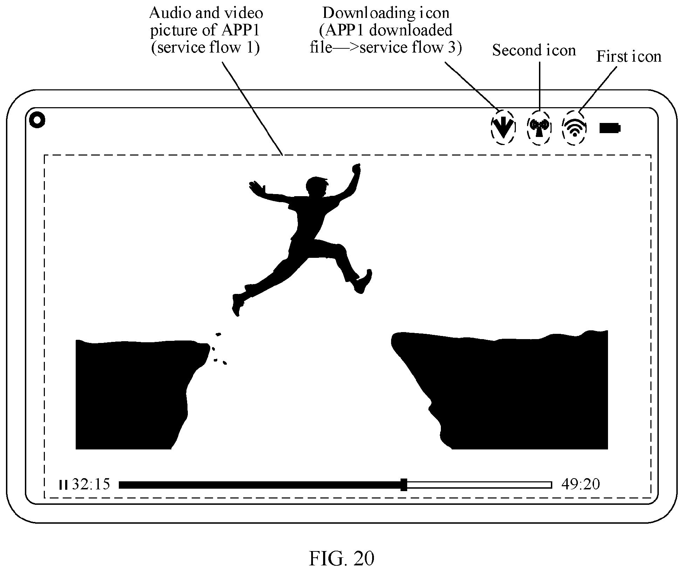

With reference to FIG. 20, illustratively, after the first terminal device is a tablet computer, and a user enables a multi-network coordinated operation function through the method provided by the embodiment, and sets a network selection mode to be a concurrent flow-division mode of different service flows of a same application (in which a control 10b-23 is selected and is in an enabled state, for example, in a form of a control 10b-1) or an automatic mode (in which a control 10b-24 is selected and is in an enabled state, for example, in a form of a control 10b-1), if a WIFI network and a hotspot network are available currently, the tablet computer may access the WIFI network and the hotspot network, and a display interface may display both the first icon and the second icon.

Further, with reference to FIG. 20, illustratively, when APP1 runs at a foreground of the tablet computer and a user uses the APP1 to watch an audio/video picture, the user needs to process a service flow 1 corresponding to the audio/video picture of the APP1 with a network resource. For example, a service flow corresponding to the audio/video picture is obtained from a server corresponding to the APP1, and is displayed on a display interface of the tablet computer. In a process of watching the audio/video picture through the APP1, if the user further uses the APP1 to download a file, for example, download another audio/video content, a downloading icon may be displayed on the display interface of the tablet computer. As shown in FIG. 20, the downloading icon i indicates that the APP1 is downloading a file. In this case, a service flow 3 corresponding to the downloaded file needs to be processed with network resources. In a scene where a plurality of different service flows corresponding to the same application as shown in FIG. 20 need to be processed with network resources simultaneously, the service flow having a higher priority in the service flow 1 and the service flow 3 may be dispatched to the hotspot network indicated by the second icon, and the service flow having a lower priority may be dispatched to the WIFI network indicated by the first icon.

Illustratively, as can be seen from the description of the priority matrix table shown in Table 1 in the embodiment, a priority of a service flow generated in an application or a service scene of an audio/video type that runs at the foreground is higher than that of an application or a service scene of a downloading type that runs at the background. Thus, in a case that the service flow 1 is of an audio/video type and the service flow 3 is of a downloading type, a priority of the service flow 1 is higher than a priority of the service flow 3. Thus, the service flow 1 may be dispatched to the hotspot network indicated by the second icon, and the service flow 3 may be dispatched to the WIFI network indicated by the first icon. In this way, concurrent flow-division of service flows corresponding to different service scenes in the same application is implemented.

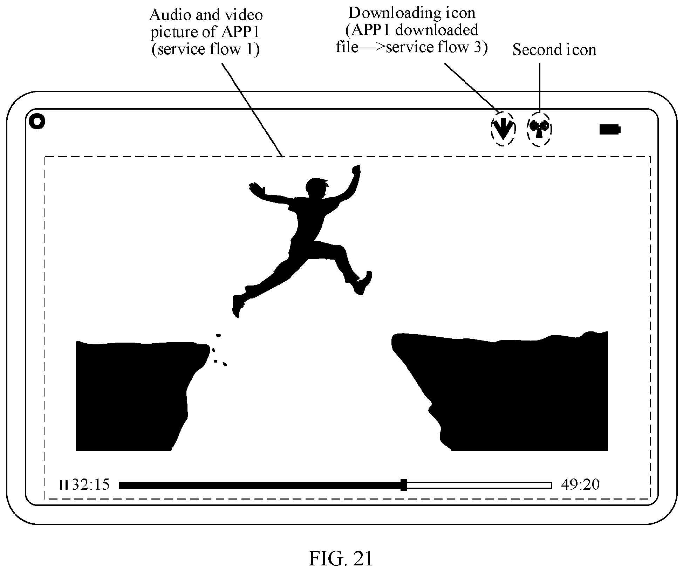

With reference to FIG. 21, illustratively, after the first terminal device is a tablet computer, and a user enables a multi-network coordinated operation function through the method provided by the embodiment, and sets a network selection mode to be an either-or mode (in which a control 10b-22 is selected and is in an enabled state, for example, in a form of a control 10b-1) or an automatic mode (in which a control 10b-24 is selected and is in an enabled state, for example, in a form of a control 10b-1), if an available hotspot network exists currently while no available WIFI network exists currently, the tablet computer may access the hotspot network, and a display interface may display a second icon and does not display a first icon.

Further, with reference to FIG. 21, illustratively, when APP1 runs at a foreground of the tablet computer and a user uses the APP1 to watch an audio/video picture, the user needs to process a service flow 1 corresponding to the audio/video picture of the APP1 with a network resource. For example, a service flow corresponding to the audio/video picture is obtained from a server corresponding to the APP1, and is displayed on a display interface of the tablet computer. In a process of watching the audio/video picture through the APP1, if the user further uses the APP1 to download a file, for example, download another audio/video content, a downloading icon may be displayed on the display interface of the tablet computer. As shown in FIG. 21, the downloading icon indicates that the APP1 is downloading a file. In this case, a service flow 3 corresponding to the downloaded file needs to be processed with network resources. In a scene where a plurality of different service flows corresponding to the same application as shown in FIG. 21 need to be processed with network resources simultaneously, only a hotspot network may be used currently. Thus, both the service flow 1 and the service flow 2 are dispatched to the hotspot network indicated by the second icon. In this way, in a case without an available WIFI network, the service flow that has to be processed is dispatched to the hotspot network, such that normal service processing of the tablet computer can be ensured, and user experience can be ensured.

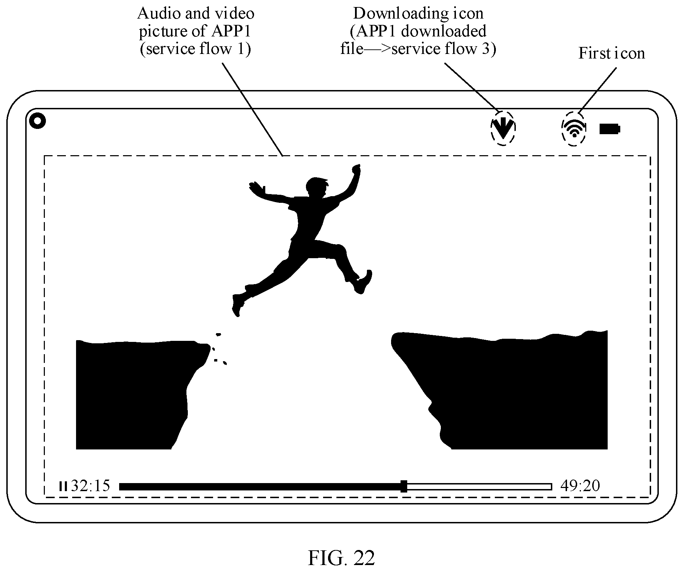

With reference to FIG. 22, illustratively, after the first terminal device is a tablet computer, and a user enables a multi-network coordinated operation function through the method provided by the embodiment, and sets a network selection mode to be an either-or mode (in which a control 10b-22 is selected and is in an enabled state, for example, in a form of a control 10b-1) or an automatic mode (in which a control 10b-24 is selected and is in an enabled state, for example, in a form of a control 10b-1), if an available WIFI network exists currently while no available hotspot network exists currently, or a WIFI network and a hotspot network are currently available, the tablet computer may access the WIFI network, and a display interface may display a first icon and does not display a second icon.

Further, with reference to FIG. 22, illustratively, when APP1 runs at a foreground of the tablet computer and a user uses the APP1 to watch an audio/video picture, the user needs to process a service flow 1 corresponding to the audio/video picture of the APP1 with a network resource. For example, a service flow corresponding to the audio/video picture is obtained from a server corresponding to the APP1, and is displayed on a display interface of the tablet computer. In a process of watching the audio/video picture through the APP1, if the user further uses the APP1 to download a file, for example, download another audio/video content, a downloading icon may be displayed on the display interface of the tablet computer. As shown in FIG. 22, the downloading icon indicates that the APP1 is downloading a file. In this case, a service flow 3 corresponding to the downloaded file needs to be processed with network resources. In a scene where a plurality of different service flows corresponding to the same application as shown in FIG. 22 need to be processed with network resources simultaneously, only a WIFI network link currently exists. Thus, both the service flow 1 and the service flow 2 are dispatched to the WIFI network indicated by the first icon. In this way, in an either-or network mode, as long as there is an available WIFI network, a service flow that has to be processed by the tablet computer is dispatched to the WIFI network without resort to the hotspot network enabled by the second terminal device, such that consumption of cellular traffic of the second terminal device is reduced.

Reference may be made to the embodiments for technical details related to enabling the hotspot network by the second terminal device, accessing a first hotspot network by the first terminal device, and enabling a multi-network coordinated operation function by the first terminal device, which will not be repeated herein.

In addition, it should be further noted that in an actual application scene, the method for multi-network coordinated operation provided by all the embodiments and implemented by the terminal device may alternatively be performed by a chip system included in the terminal device. The chip system may include a processor. The chip system may be coupled to a memory, so that the chip system invokes, when running, a computer program stored in the memory, to implement the foregoing steps performed by the terminal device. The processor in the chip system may be an application processor or a processor that is not an application processor.

In addition, the embodiments of the disclosure further provide a system for multi-network coordinated operation. Illustratively, the system includes the first terminal device and the second terminal device. The second terminal device establishes a mobile connection to a base station through a cellular network, and establishes a wireless connection to the first terminal device through a hotspot network.

Illustratively, in some implementations, the first terminal device is configured to perform the following operations:
when a service flow having a first priority and a service flow having a second priority that have to be processed exist, current WIFI network information is obtained; a QoE evaluation result of user experience is determined according to the WIFI network information, the service flow having the first priority, and the service flow having the second priority, where the QoE evaluation result is used for indicating whether a WIFI network is capable of simultaneously processing the service flow having the first priority and the service flow having the second priority, and the first priority is higher than the second priority; and when it is determined that the QoE evaluation result indicates that the WIFI network is incapable of simultaneously processing the service flow having the first priority and the service flow having the second priority, the service flow having the first priority is dispatched to a hotspot network enabled by the second terminal device, and the service flow having the second priority is dispatched to the WIFI network.

Accordingly, the second terminal device is configured to: dispatch the service flow having the first priority transmitted by the first terminal device through the hotspot network to the base station for processing through the cellular network.

Reference may be made to the embodiments for technical details related to enabling the hotspot network by the second terminal device, accessing a first hotspot network by the first terminal device, and enabling a multi-network coordinated operation function by the first terminal device, which will not be repeated herein.

In addition, the embodiments of the disclosure further provide a computer-readable storage medium. The computer storage medium stores computer instructions. When the computer instructions run on a terminal device, the terminal device is caused to perform related method steps to implement the method for multi-network coordinated operation of the embodiments.

In addition, the embodiments of the disclosure further provide a computer program product. When the computer program product runs on a terminal device, the terminal device is caused to perform related steps to implement the method for multi-network coordinated operation of the embodiments.

In addition, the embodiments of the disclosure further provide a chip (or a component or a module). The chip may include one or more processing circuits and one or more transceiver pins. The transceiver pin and the processing circuit are in communication with each other through an internal connection path. The processing circuit performs related method steps to implement the method for multi-network coordinated operation of the embodiments, to control a reception pin to receive a signal and control a transmission pin to transmit a signal.

In addition, as can be seen from the description, the terminal device, the computer-readable storage medium, the computer program product or the chip provided by the embodiment of the disclosure is configured to perform the corresponding method provided above. Thus, reference may be made to beneficial effects of the corresponding method provided above for beneficial effects that may be achieved by the terminal device, the computer-readable storage medium, the computer program product or chip, which will not be repeated herein.

In conclusion, the embodiments are merely used for describing rather than limiting the technical solutions of the disclosure. Although the disclosure is described in detail with reference to the embodiments, it should be understood by those of ordinary skill in the art that the technical solutions described by the embodiments can be modified, or equivalent substitutions can be made to some technical features, while the modifications or substitutions do not make the essence of the corresponding technical solutions depart from the scope of the technical solutions of all the embodiments of the disclosure.

## Claims

1. A method for multi-network coordinated operation, applied to a first terminal device, comprising:
obtaining current WIFI network information when a service flow having a first priority and a service flow having a second priority that have to be processed exist;
determining a QoE evaluation result of user experience according to the WIFI network information, the service flow having the first priority, and the service flow having the second priority, wherein the QoE evaluation result is used for indicating whether a WIFI network is capable of simultaneously processing the service flow having the first priority and the service flow having the second priority, and the first priority is higher than the second priority; and
dispatching the service flow having the first priority to a hotspot network enabled by a second terminal device when it is determined that the QoE evaluation result indicates that the WIFI network is incapable of simultaneously processing the service flow having the first priority and the service flow having the second priority, and dispatching the service flow having the second priority to the WIFI network, wherein
the second terminal device establishes a mobile connection to a base station through a cellular network, and establishes a wireless connection to the first terminal device through the hotspot network.

2. The method according to claim 1, wherein in a process in which the first terminal device uses the WIFI network, the method further comprises:
determining applications currently running on the first terminal device, wherein the applications comprise a first application having a first priority and a second application having a second priority;
using a service flow corresponding to the first application as the service flow having the first priority; and
using a service flow corresponding to the second application as the service flow having the second priority.

3. The method according to claim 1, wherein in a process in which the first terminal device uses the WIFI network, the method further comprises:
determining applications currently running on the first terminal device, wherein the applications comprise a first application having a first priority and a second application having a second priority;
determining a source of a service flow corresponding to the first application;
using the service flow corresponding to the first application as the service flow having the first priority when it is determined that the service flow corresponding to the first application is from a service scene;
determining a priority corresponding to each of the service scenes when it is determined that the source of the service flow corresponding to the first application at least comprises two service scenes;
using a service flow corresponding to the service scene having a higher priority in the first application as the service flow having the first priority, and using a service flow corresponding to the service scene having a lower priority in the first application as the service flow having the second priority;
determining a source of a service flow corresponding to the second application;
using the service flow corresponding to the second application as the service flow having the second priority when it is determined that the service flow corresponding to the second application is from a service scene;
determining a priority corresponding to each of two service scenes when it is determined that the source of the service flow corresponding to the second application at least comprises the two service scenes; and
using a service flow corresponding to the service scene having a higher priority in the second application as the service flow having the first priority, and using a service flow corresponding to the service scene having a lower priority in the second application as the service flow having the second priority.

4. The method according to claim 3, wherein the determining a source of a service flow corresponding to the first application comprises:
determining a number of service scenes comprised in the first application according to attribute information of the first application;
determining that the service flow corresponding to the first application is from a service scene when it is determined that a number of the service scene comprised in the first application is 1;
determining an application programming interface invoked when the first application provides the service flow when it is determined that the number of service scenes comprised in the first application is greater than 1, wherein different application programming interfaces correspond to different service scenes; and
conducting de-duplication on the invoked application programming interface, and obtaining a number of service scenes of the service flow provided by the first application.

5. The method according to claim 3, wherein the determining a source of a service flow corresponding to the second application comprises:
determining a number of service scenes comprised in the second application according to attribute information of the second application;
determining that the service flow corresponding to the second application is from a service scene when it is determined that a number of the service scene comprised in the second application is 1;
determining an application programming interface invoked when the second application provides the service flow when it is determined that the number of service scenes comprised in the second application is greater than 1, wherein different application programming interfaces correspond to different service scenes; and
conducting de-duplication on the invoked application programming interface, and obtaining a number of service scenes of the service flow provided by the second application.

6. The method according to claim 1, further comprising:
dispatching both the service flow having the first priority and the service flow having the second priority to the hotspot network enabled by the second terminal device when it is determined that the QoE evaluation result indicates that the WIFI network is incapable of processing both the service flow having the first priority and the service flow having the second priority.

7. The method according to claim 6, wherein after the dispatching both the service flow having the first priority and the service flow having the second priority to the hotspot network enabled by the second terminal device, the method further comprises:
stopping dispatching the service flow having the first priority and the service flow having the second priority to the hotspot network when it is determined that the QoE evaluation result indicates that the WIFI network is capable of simultaneously processing the service flow having the first priority and the service flow having the second priority or another accessible WIFI network is searched for, and dispatching the service flow having the first priority and the service flow having the second priority to the WIFI network, or searching for another accessible WIFI network.

8. The method according to claim 1, further comprising:
dispatching both the service flow having the first priority and the service flow having the second priority to the WIFI network when it is determined that the QoE evaluation result indicates that the WIFI network is capable of simultaneously processing the service flow having the first priority and the service flow having the second priority.

9. The method according to any one of claims 1 to 8, further comprising:
determining whether the first terminal device enables a multi-network coordinated operation function;
performing the step of dispatching the service flow having the first priority to the hotspot network enabled by the second terminal device when it is determined that the first terminal device enables the multi-network coordinated operation function;
displaying a first access when it is determined that the first terminal device does not enable the multi-network coordinated operation function; and
enabling the multi-network coordinated operation function in response to an operation behavior of the first access, and performing the step of dispatching the service flow having the first priority to the hotspot network enabled by the second terminal device.

10. The method according to claim 9, wherein before the dispatching the service flow having the first priority to the hotspot network enabled by the second terminal device, the method further comprises:
determining whether to access the hotspot network enabled by the second terminal device;
performing the step of dispatching the service flow having the first priority to the hotspot network enabled by the second terminal device when the hotspot network enabled by the second terminal device is accessed;
obtaining hotspot network information within a connection range when the hotspot network enabled by the second terminal device is not accessed, wherein the hotspot network information comprises hotspot networks enabled by all third terminal devices having a cellular communication capability within the connection range;
using the third terminal device having the hotspot network optimal in network quality in the hotspot network information as the second terminal device; and
accessing the hotspot network enabled by the second terminal device, and performing the step of dispatching the service flow having the first priority to the hotspot network enabled by the second terminal device.

11. The method according to claim 10, wherein after the obtaining hotspot network information within a connection range, the method further comprises:
displaying the hotspot network information on an interface of the first terminal device; and
using the third terminal device providing the hotspot network as the second terminal device in response to a selection operation of a user for any hotspot network in the hotspot network information, accessing the hotspot network enabled by the second terminal device, and performing the step of dispatching the service flow having the first priority to the hotspot network enabled by the second terminal device.

12. The method according to claim 10, wherein before the obtaining hotspot network information within a connection range, the method further comprises:
determining whether a multi-screen coordinated connection is established between the first terminal device and the second terminal device;
controlling the second terminal device to enable the hotspot network when it is determined that the multi-screen coordinated connection is established between the first terminal device and the second terminal device, accessing the hotspot network enabled by the second terminal device, and performing the step of dispatching the service flow having the first priority to the hotspot network enabled by the second terminal device; and
performing the step of obtaining the hotspot network information within the connection range when it is determined that the multi-screen coordinated connection is not established between the first terminal device and the second terminal device.

13. The method according to any one of claims 1 to 8, wherein in different first terminal devices, same applications have a same priority, and same service scenes have a same priority.

14. The method according to any one of claims 1 to 8, wherein in different first terminal devices, same applications have different priorities, and same service scenes have different priorities.

15. A method for multi-network coordinated operation, applied to a first terminal device, comprising:
dispatching, in a process in which a first icon and a second icon are displayed on a display interface of the first terminal device, a service flow having a first priority to a hotspot network indicated by the second icon and dispatching a service flow having a second priority to a WIFI network indicated by the first icon when a service flow that has to be processed exists, wherein
the first priority is higher than the second priority, and the hotspot network is provided by a second terminal device establishing a mobile connection to a base station.

16. The method according to claim 15, further comprising:
dispatching, in a process in which the first icon displayed on the display interface disappears and the second icon is displayed, the service flow to the hotspot network indicated by the second icon when the service flow that has to be processed exists.

17. The method according to claim 16, further comprising:
stopping, after the first icon is re-displayed on the display interface, dispatching the service flow to the hotspot network, and dispatching the service flow to the WIFI network indicated by the first icon;
or,
stopping dispatching the service flow having the second priority to the hotspot network, dispatching the service flow having the first priority to the hotspot network indicated by the second icon, and dispatching the service flow having the second priority to the WIFI network indicated by the first icon.

18. The method according to claim 15, further comprising:
dispatching, in a process in which the second icon displayed on the display interface disappears and the first icon is displayed, the service flow to the WIFI network indicated by the first icon when the service flow that has to be processed exists.

19. The method according to any one of claims 15 to 18, wherein the service flow having the first priority is a service flow generated in an application or a service scene of an audio/video calling/conference type that runs at a foreground, and the service flow having the second priority is a service flow generated in an application or a service scene that runs at a background.

20. The method according to any one of claims 15 to 18, wherein the service flow having the first priority is a service flow generated in an application or a service scene of a gaming type that runs at a foreground, and the service flow having the second priority is a service flow generated in an application or a service scene that runs at a background.

21. A system for multi-network coordinated operation, comprising: a first terminal device and a second terminal device, wherein the second terminal device establishes a mobile connection to a base station through a cellular network, and establishes a wireless connection to the first terminal device through a hotspot network;
the first terminal device is configured to:
obtain current WIFI network information when a service flow having a first priority and a service flow having a second priority that have to be processed exist;
determine a QoE evaluation result of user experience according to the WIFI network information, the service flow having the first priority, and the service flow having the second priority, wherein the QoE evaluation result is used for indicating whether a WIFI network is capable of simultaneously processing the service flow having the first priority and the service flow having the second priority, and the first priority is higher than the second priority; and
dispatch the service flow having the first priority to a hotspot network enabled by the second terminal device when it is determined that the QoE evaluation result indicates that the WIFI network is incapable of simultaneously processing the service flow having the first priority and the service flow having the second priority, and dispatch the service flow having the second priority to the WIFI network; and
the second terminal device is configured to:
dispatch the service flow having the first priority transmitted by the first terminal device through the hotspot network to the base station for processing through the cellular network.

22. A terminal device, comprising: a memory and a processor, wherein the memory is coupled to the processor; and the memory stores program instructions, and when the program instructions are performed by the processor, the terminal device is caused to perform the method for multi-network coordinated operation according to any one of claims 1 to 14, or perform the method for multi-network coordinated operation according to any one of claims 15 to 20.

23. A computer-readable storage medium, comprising: a computer program, wherein when the computer program runs on a terminal device, the terminal device is caused to perform the method for multi-network coordinated operation according to any one of claims 1 to 14, or perform the method for multi-network coordinated operation according to any one of claims 15 to 20.
